# EUROPÄISCHE PATENTSCHRIFT

(11) **EP 2 578 519 B1**
(45) Veröffentlichungstag und Bekanntmachung des Hinweises auf die Patenterteilung: **01.03.2017**
(21) Anmeldenummer: 12186765.9
(22) Anmeldetag: 01.10.2012
(51) Int. Cl.: B65G 27/08, B65G 27/30

(54) **Linear-Vibrationsförderer**
Linear vibration conveyer
Transporteur linéaire à vibrations

(30) Priorität: 07.10.2011 DE 102011054301
(43) Veröffentlichungstag der Anmeldung: 10.04.2013
(73) Patentinhaber: Rhein-Nadel Automation GmbH, 52068 Aachen (DE)
(72) Erfinder: Stickelmann, Josef, 52076 Aachen (DE)
(74) Vertreter: Brötz, Helmut

(56) Entgegenhaltungen:
- JP-A- 58 202 209
- SU-A1- 380 566
- US-A- 4 260 051

## Beschreibung

Die vorliegende Erfindung betrifft einen Linear-Vibrationsförderer gemäß Oberbegriff von Anspruch 1.

Ein Linear-Vibrationsförderer ist im Stand der Technik aus WO 2007/003570 A1 bekannt. Die Beweglichkeit wird dort mittels einer Federgruppe aus fünf Blattfederstapeln erreicht, die in Richtung parallel zu der Förderrichtung des Linear-Vibrationsförderers voneinander beabstandet angeordnet sind, wobei die oberen Federenden an dem Schwinger und die unteren Federenden an der Gegenmasse befestigt sind. Bei dem bekannten Linear-Vibrationsförderer ist noch eine zweite Federgruppe vorhanden. Diese umfasst vier Zylinderfedern, mittels denen die Gegenmasse an von einer Grundplatte ausgehenden Vertikalträgern aufgehängt ist. Dadurch soll erreicht werden, dass möglichst wenig Schwingungen zwischen dem Schwinger und Gegenmasse einerseits und Fundament andererseits übertragen werden. Im Stand der Technik sind außerdem Linear-Vibrationsförderer bekannt, deren Gegenmasse mittels Gummifüßen auf einem Maschinengestell bzw. Fundament abgestützt ist, um die Schwingungsübertragung möglichst zu vermeiden. Dabei besteht die Schwierigkeit, dass je nach gewähltem Gummiwerkstoff entweder doch Schwingungen übertragen werden oder die Anordnung nicht ausreichend stabil ist. Bei einer weiteren, im Stand der Technik aus EP 2 011 750 A1 bekannten Bauform eines Linear-Vibrationsförderers sind der Schwinger und die Gegenmasse jeweils unmittelbar mittels Blattfedern an dem Grundgestell einseitig aufgehängt. Hieran wird als nachteilig sowohl eine begrenzte Stabilität der Gesamt-Anordnung als auch eine Schwingungs-Übertragung zwischen Schwinger-Gegenmasse einerseits und Grundgestell bzw. Fundament andererseits empfunden.

Ein Linear-Vibrationsförderer gemäß dem Oberbegriff von Anspruch 1 ist aus US 4,260,051 A bekannt. Dort sind den Schwinger und die Gegenmasse verbindende Federn mittels je eines mit einem Elastomer ummantelten Zapfens auf einer ebenen Basis abgestützt.

Vor diesem Hintergrund liegt der Erfindung die Aufgabe zugrunde, einen Linear-Vibrationsförderer der eingangs genannten Art vorteilhaft weiterzubilden. Insbesondere ist angestrebt, dass zufolge der Weiterbildung eine Schwingungs-Übertragung von Schwinger und Gegenmasse auf das Maschinengestell bzw. Fundament (und insbesondere in umgekehrter Richtung) möglichst weitgehend, vorzugsweise vollständig, vermieden und dennoch gleichzeitig eine befriedigende Stabilität des Aufbaues erreicht werden kann.

Die Aufgabe wird erfindungsgemäß in Verbindung mit den im Kennzeichen von Anspruch 1 enthaltenen Merkmalen gelöst.

Diese völlig neuartige Anordnung ermöglicht es vorteilhaft, dass eine im Vergleich zu bekannten Linear-Vibrationsförderern vergleichsweise große Steifigkeit des Gesamtsystems erzielbar ist. Der erfindungsgemäße Linear-Vibrationsförderer ermöglicht es, dass der Schwinger und die Gegenmasse aufeinander massen- bzw. gewichtsmäßig so abgestimmt werden, dass sie bei einer Schwingungsanregung mittels des Vibrationsantriebs zueinander symmetrische oder zumindest nahezu symmetrische Schwingungen ausführen, wobei insbesondere als Idealfall eine Abstimmung vorliegt, bei welcher der Schwinger und die Gegenmasse zueinander völlig symmetrische Schwingungen bzw. Vibrationen ausführen. Vorzugsweise sind der Schwinger und die Gegenmasse gewichtsmäßig so aufeinander abgestimmt, dass sie die gleiche Gesamtmasse besitzen, wobei lose, d. h. nicht fest angekoppelte Anbauteile unberücksichtigt bleiben; bevorzugt ist auch eine jeweils bestimmte Lage des Schwerpunktes des Schwingers und des Schwerpunktes der Gegenmasse, vorzugsweise in der Weise, dass sich die Federlängsrichtung bzw. die Richtung der Feder-Biegelinie (gemeint ist hier die Richtung bzw. Koordinate derjenigen Biegelinie der Biegefeder mit der im Vergleich zu verschiedenen Richtungen größten Biegung bei Vibrationserregung) der Biegeelemente bzw. der Biegefedern im wesentlichen oder annähernd senkrecht zu einer Verbindungslinie zwischen diesen beiden Schwerpunkten erstreckt. Wenn die Biegefeder-Anordnungen in Bezug auf das Drehlager symmetrisch gestaltet sind, d. h. insbesondere wenn
die Ausgestaltung zwischen der Drehlager-Anschlusseinrichtung und der Schwinger-Anschlusseinrichtung einerseits und zwischen der Drehlager-Anschlusseinrichtung und der Gegenmasse-Anschlusseinrichtung andererseits zueinander in Bezug auf das dazu zentrale Drehlager zueinander symmetrisch gewählt ist, lassen sich vorteilhaft beim Vibrationsbetrieb an den je zwei Seiten- bzw. Längenabschnitten einer jeden Drehlager-Anschlusseinrichtung bezüglich des zentralen, vorzugsweise mittigen, Drehlagers zueinander symmetrische, insbesondere zueinander punktsymmetrische, Verformungen der beiden jeweiligen Seiten bzw. auf je einer Seite des Drehlagers angeordneten Längenabschnitte der Biegefeder-Anordnungen erreichen. Die Vibrationsfrequenz (anstelle von Vibrationen kann allgemein auch von Schwingungen, insbesondere mit vergleichsweise kleiner Schwingungsamplitude, gesprochen werden) ist bevorzugt so eingestellt, dass sie etwas niedriger als eine Resonanzfrequenz der schwingenden Baugruppen des Linear-Vibrationsförderers ist. Auf die beschriebene Weise lässt sich an den beiden besagten Biegefederabschnitten oder an den stattdessen gewählten beiden Biegefedern, jeweils in Gesamtheit, in bevorzugter Weise eine Schwingungs-Eigenform erreichen, bei welcher in einer zu der geometrischen Drehachse senkrechten Betrachtungsebene ein Schwingungsknoten positionsmäßig mit der geometrischen Drehachse zusammenfällt. Die geometrische Drehachse erstreckt sich vorzugsweise senkrecht zu der Förderlängsrichtung der Biegefedern bzw. Biegefederabschnitte. Mit anderen Worten führt die Drehlager-Anschlusseinrichtung dann im Vibrationsbetrieb in ihrem Zentrum, d. h. an ihrem Drehlagermittel, ausschließlich eine Drehschwingung, d. h. im Idealfall ohne translatorischen Bewegungsanteil, aus. Diese reine Mikro-Drehschwingung bzw. reine Dreh-Vibration kann zufolge der genau dort vorgesehenen Drehlagerung kein Drehmoment und folglich keine Schwingungen auf das Grundgestell bzw. Fundament übertragen. Indem die Biegefeder-Anordnungen an ihren jeweiligen Drehlagermitteln, bei denen es sich bspw. um Gelenkzapfen, eine Gelenkachse oder um eine oder mehrere Achsbohrungen handeln kann, vorzugsweise eine rein oszillierende Drehbewegung im Vibrationsbetrieb ausführt, können über das Drehlager keine Vibrationsbewegungen und -kräfte bzw. Drehmomente auf das starre Grundgestell bzw. Fundament übertragen werden. Bei einer in dem zuvor beschriebenen Sinne idealen Abstimmung der Komponenten des erfindungsgemäßen Linear-Vibrationsförderers wird eine vollständige Schwingungs-Entkoppelung zwischen dem ruhenden Grundgestell bzw. Fundament und den schwingenden Komponenten (also dem Schwinger und der Gegenmasse) andererseits erreicht. Je weiter in der Praxis die beschriebene Abstimmung der Komponenten an die in dem erläuterten Sinne ideale Abstimmung angenähert wird, um so wirksamer wird die Schwingungs-Übertragung unterbunden.

Der erfindungsgemäße Linear-Vibrationsförderer kann u. a. für die gleichen Förder-Anwendungen eingesetzt werden wie der eingangs genannte, bekannte Linear-Vibrationsförderer. Insbesondere können damit kleine und kleinste Bauteile, wie bspw. elektrische Steckerteile oder dergleichen, oder bspw. auch granulat- oder pulverförmige Stoffe, in einer Förderrichtung entlang der Längserstreckung des Schwingers von einer Eingabeseite zu einer Ausgabeseite gefördert werden. In an sich bekannter Weise entsteht die Förderbewegung dadurch, dass die an der Oberseite des Schwingers auf dort montierten sog. Aufbauten (wie bspw. Schienen oder dergleichen) aufgelegte Fördergutteile bei einer aufwärts gerichteten Vibrationsbewegung des Schwingers mitbeschleunigt und bei der im zeitlichen Wechsel dazu rückwärtigen Vibrationsbewegung abgehoben werden, wobei die Schwingungsrichtung so gewählt ist, dass die wiederholte Mikrowurfbewegung des Förderguts von der Eingabeseite zu der Ausgabeseite gerichtet ist. Die Schwingungsrichtung und -amplitude kann insbesondere durch die Wahl der Ausrichtung der Biegefedern, der Antriebs- bzw.

Erregungsrichtung des Vibrationsantriebes relativ zu dem Schwinger und zu der Gegenmasse sowie durch die Massen und Massenverteilung von Schwinger und Gegenmasse beeinflusst werden. Zufolge der im Betrieb gewählten vergleichsweise hohen Frequenz und geringen Weite der einzelnen Mikrowürfe entsteht der Eindruck einer quasi kontinuierlichen Transportbewegung. Der Schwinger und die Gegenmasse führen dabei zueinander gegenläufige und wie schon beschrieben zueinander vorzugsweise symmetrische Schwingungen aus. Begrifflich wird in der Fachsprache für den Begriff Schwinger auch die Bezeichnung Nutzmasse, für den Begriff Gegenmasse auch die Bezeichnung Grundmasse und bisweilen für den Begriff Grundgestell (oder Maschinengestell) auch die Bezeichnung Fundament verwendet.

Dass eine oder nahezu keine Schwingungen bzw. Vibrationen auf das Fundament übertragen werden, kann in verschiedener Hinsicht Vorteile bieten. Zum Einen kann dadurch bei erfindungsgemäßen Linear-Vibrationsförderern gänzlich darauf verzichtet werden, diese auf Dämpfern bzw. nachgiebigen Stützen, wie bspw. auf Gummipuffern, auf einer Masse, auf der der Linearförderer zu stehen kommt, bspw. auf einem Untergrund, wie bspw. einem Hallenboden, einem Traggestell oder dergleichen anzuordnen. Stattdessen kann der Linear-Vibrationsförderer je nach Anforderungen bspw. sogar starr auf einem zur Verfügung stehenden festen Untergrund, Gestell oder dergleichen aufgestellt werden, also fest an die Masse, auf der er zu stehen kommt, angekoppelt werden, ohne dass dies das Förderverhalten beeinträchtigt. Im Vergleich zu den beschriebenen, bekannten Linear-Vibrationsförderern erhöht dies die Steifigkeit des Systems. Da der Linear-Vibrationsförderer vorzugsweise keine oder zumindest keine nennenswerten Vibrationen auf das Grundgestell bzw. Fundament und den Untergrund überträgt, das Fundament und der Untergrund also bzgl. der Vibrationen quasi abgekoppelt sind, besitzt auch die Masse des jeweils gewählten Fundaments und des zur Aufstellung gewählten Untergrunds nun vorteilhaft keinen oder zumindest keinen nennenswerten Einfluss auf das Schwing- bzw. auf das Förderverhalten. Somit wirkt sich bspw. auch nicht oder zumindest nicht nennenswert auf die Förderwirkung aus, ob der Linear-Vibrationsförderer auf einem Untergrund, bspw. auf einem Hallenboden, fest verankert oder nur lose darauf abgestellt ist. Hinzu kommt als Vorteil, dass durch die schwingungsmäßige Abkoppelung des Fundaments auch die gewichtsmäßige Anpassung der Gegenmasse an den Schwinger, wenn dessen Aufbauten je nach betrieblichen Anforderungen verändert wurden, im Vergleich zu herkömmlichen Schwingförderern, bei denen eine bestimmte Masse des Fundaments und ggf. des Untergrundes benötigt und zu berücksichtigen ist, vereinfacht wird.

Wie schon angesprochen, besitzen Linear-Vibrationsförderer zum Fördern von Kleinteilen in der Regel an der Oberseite des Schwingers sog. Aufbauten, bei denen es sich bspw. um angeschraubte Förderschienen, insbesondere mit zur Sortierung des Fördergutes dienenden Hindernissen, handeln kann. In der Praxis müssen die zu fördernden Kleinteile häufig zunächst von Baugruppen oder Maschinenteilen, wie bspw. von Führungsschienen vorgelagerter Geräte, an die Eingabeseite des Linear-Vibrationsförderers übergeben und/ oder nach der Förderung bei Verlassen der Ausgabeseite an solche Baugruppen oder Maschinenteile übergeben werden. Insofern vorteilhaft besteht nun die Möglichkeit, auf oder an dem gleichen Fundament, bspw. auf der Grundplatte des Linear-Vibrationsförderers, auf der weitere Grundgestellkomponenten aufgebaut sind, auch noch ein oder bei Bedarf mehrere Führungsanschlusselemente biegesteif abzustützen, die in Förderrichtung vor dem Schwinger zur Zufuhr von Teilen angeordnet sein können und an die von Anwendern je nach Anforderungen weitere Baugruppen, wie bspw. Führungsschienen, vorzugsweise starr, angeschlossen werden können. Da diese weiteren Baugruppen häufig nicht vibrieren sollen, wird diese Anforderung oft auch an die damit starr verbundenen, als Übergang bzw. zur Zu- oder Abfuhr dienenden Führungsanschlusselemente gestellt. Indem der erfindungsgemäße Linear-Vibrationsförderer keine oder zumindest keine nennenswerten Vibrationen bzw. Schwingungen auf das Fundament überträgt, können nun diese zur Zu- oder Abfuhr von Fördergut dienenden Führungsanschlusselemente vorteilhaft auch fest auf oder an dem Fundament des Linear-Vibrationsförderers befestigt werden, ohne dadurch von dem Fundament zu Vibrationen angeregt zu werden.

Bei der Anwendung des erfindungsgemäßen Linear-Vibrationsförderers ist bevorzugt, dass die Erregerfrequenz bzw. die Betriebsfrequenz des Vibrationsantriebes etwas unterhalb einer gewählten Eigenfrequenz bzw. Resonanzfrequenz der schwingenden bzw. vibrierenden Massen gewählt ist. Dies kann auf unterschiedliche Weise erreicht werden. Falls die Erregerfrequenz fest vorgegeben ist, kann die gewählte Eigenfrequenz vorzugsweise durch Auswahl bzw. Abstimmung der Biegefedern und/oder vorzugsweise von vorhandenen Zusatz-Biegefedern und/oder durch Auswahl bzw. Abstimmung des Gewichtes und der Gewichtsverteilung von Schwinger und Gegenmasse so beeinflusst werden, dass diese etwas oberhalb der vorgegebenen Erregerfrequenz liegt. Ist anderenfalls die Erregerfrequenz einstellbar, kann dies alternativ oder kombinativ genutzt werden.

Indem sich bei dem erfindungsgemäßen Linear-Vibrationsförderer der Schwinger und die Gegenmasse schwingungsmäßig nahezu oder vollständig von dem Grundgestell abkoppeln lassen, kann wie beschrieben auf eine steife Befestigung des Grundgestells auf einem Untergrund verzichtet werden, so dass sich der Linear-Vibrationsförderer vorteilhaft auch ohne großen Montageaufwand an wechselnden Orten einsetzen lässt. Es wäre sogar denkbar, dass der Linear-Vibrationsförderer ein auf dem Untergrund fahrbares Grundgestell aufweist oder dass das Grundgestell bspw. an einer Raumdecke aufgehängt ist.

Der Begriff Biegefeder ist in seiner Bedeutung breit auszulegen. Im Rahmen der Erfindung kann es sich dabei allgemein um ein Bauteil oder um einen Bauteilabschnitt handeln, das bzw. der zufolge seiner Gestaltung als Biegefeder wirksam sein kann, d. h. entgegen einer Federkraft, vorzugsweise elastisch, verformbar ist. Unter der sog. Federlängsrichtung wird eine zu der Richtung der geometrischen Drehachse des Drehlagers vorzugsweise quer verlaufende Richtung bzw. die entsprechende Koordinate der Biegelinie verstanden.

Es bestehen zahlreiche Möglichkeiten, um den erfindungsgemäßen Linear-Vibrationsförderer vorteilhaft weiterzubilden. So ist bspw. bevorzugt, dass sich der erste Biegefederabschnitt und der zweite Biegefederabschnitt oder dass sich die erste Biegefeder und die zweite Biegefeder, zumindest überwiegend oder entlang einer ihnen insofern gemeinsamen geometrischen Federbezugsebene erstrecken. Vorzugsweise können sich der erste und der zweite Biegefederabschnitt oder können sich die erste und die zweite Biegefeder von gegenüberliegenden Seiten der Drehlager-Anschlusseinrichtung ausgehend in einer gemeinsamen Ebene in zueinander entgegengesetzte Richtungen erstrecken. Bei einer bevorzugten Ausführungsform ist vorgesehen, dass der erste Biegefederabschnitt und der zweite Biegefederabschnitt beide integrale, d. h. einstückige Bestandteile einer Biegefeder sind, die sich entlang, vorzugsweise mittensymmetrisch zu, einer geometrischen Mittelebene der Biegefeder-Anordnung, durch die Drehlager-Anschlusseinrichtung und/oder zwischen Komponenten der Drehlager-Anschlusseinrichtung hindurch erstreckt. Bevorzugt ist auch, dass zumindest in einem unbelasteten bzw. undeformierten Zustand der Biegefeder-Anordnung eine Mittelebene der Biegefeder-Anordnung durch die geometrische Drehachse des Drehlagers verläuft und insbesondere durch eine geometrische Verbindungsachse verläuft, die durch zwei Verbindungen der Schwinger-Anschlusseinrichtung mit dem Schwinger führt, und insbesondere durch eine geometrische Verbindungsachse verläuft, welche durch zwei Verbindungen der Gegenmasse-Anschlusseinrichtung mit der Gegenmasse führt. Bei den geometrischen Verbindungsachsen kann es sich bspw. um geometrische bzw. gedachte Linien handeln, die jeweils durch zwei an der Biegefeder-Anordnung gegenüberliegend angreifende, zueinander fluchtende Verschraubungen verlaufen. Bezüglich des ersten und des zweiten Biegefederabschnittes ist auch bevorzugt, dass diese in einer Federlängsrichtung der Biegefeder, die sich quer zu der geometrischen Drehachse des Drehlagers erstreckt, einstückig aneinander grenzen, also beide jeweils Bestandteil einer Biegefeder sind, die sich von der Schwinger-Anschlusseinrichtung durch die Drehlager-Anschlusseinrichtung bis zu der Gegenmasse-Anschlusseinrichtung erstreckt.

Eine bevorzugte Weiterbildung ist auch dadurch möglich, dass der erste Biegefederabschnitt oder die erste Biegefeder an der Drehlager-Anschlusseinrichtung und/oder an der Schwinger-Anschlusseinrichtung jeweils lösbar zwischen je zwei Klemmbacken einer an der Drehlager-Anschlusseinrichtung bzw. an der Schwinger-Anschlusseinrichtung jeweils ausgebildeten Klemmeinrichtung eingespannt ist und dass der zweite Biegefederabschnitt oder die zweite Biegefeder an der Drehlager-Anschlusseinrichtung und/ oder der Gegenmasse-Anschlusseinrichtung lösbar zwischen je zwei Klemmbacken einer an der Drehlager-Anschlusseinrichtung bzw. an der Gegenmasse-Anschlusseinrichtung jeweils ausgebildeten Klemmeinrichtung eingespannt ist. Eine noch weiter bevorzugte Ausführung sieht vor, dass, in Federlängsrichtung betrachtet, die Einspannung an der Drehlager-Anschlusseinrichtung im Vergleich zu den Einspannungen an der Schwinger-Anschlusseinrichtung und an der Gegenmasse-Anschlusseinrichtung eine geringere Erstreckung bzw. Länge aufweist, wobei die Klemmung an der Drehlager-Anschlusseinrichtung unter Umständen sogar nur im Bereich linienartiger, sich insbesondere parallel zu der geometrischen Drehachse erstreckender Kontaktzonen bestehen kann, so dass anstelle einer Einspannung eine gelenkige Klemmbefestigung vorliegt. In Bezug auf die Klemmeinrichtungen ist bevorzugt, dass diese eine oder mehrere Klemmschrauben aufweisen, mittels denen ihre beiden Klemmbacken zusammengespannt werden können, wobei insbesondere vorgesehen ist, dass die Klemmschrauben durch Durchgangsbohrungen in der Biegefeder hindurchgeführt sind. Auch besteht die Möglichkeit, dass zwischen den beiden Klemmbacken der Klemmeinrichtung der Drehlager-Anschlusseinrichtung der erste und der zweite Biegefederabschnitt bei deren einstückiger Ausgestaltung gemeinsam oder die erste und die zweite Biegefeder gemeinsam lösbar eingespannt sind. Alternativ können die Schwinger-Anschlusseinrichtung und die Gegenmasse-Anschlusseinrichtung aber auch vergleichsweise einfacher ausgestaltet werden. So bestünde bspw. die Möglichkeit, dass diese jeweils nur einen oder mehrere Klemmkörper umfassen, mit dem bzw. denen sich eine Biegefeder bzw. ein Biegefederabschnitt unmittelbar gegen den somit als Gegenklemmstück dienenden Schwinger bzw. unmittelbar gegen die Gegenmasse, bspw. mittels Schraubverbindung, anpressen lässt. Eine besonders einfache Ausgestaltung wäre bspw. dadurch möglich, dass eine jeweilige Biegefeder bzw. Biegefederabschnitt an einem Längsende mittels allein als Anschlusseinrichtung dienenden Schrauben unmittelbar an dem Schwinger bzw. der Gegenmasse unter dem Schraubenkopf oder unter einer Unterlegscheibe festgeklemmt wird.

Bevorzugt ist vorgesehen, dass es sich bei der besagten Biegefeder um ein von den genannten Anschlusseinrichtungen lösbares Element handelt. Alternativ besteht aber auch die Möglichkeit, dass der erste Biegefederabschnitt oder die erste Biegefeder mit der Drehlager-Anschlusseinrichtung und/oder mit der Schwinger-Anschlusseinrichtung jeweils einstückig ausgebildet oder damit jeweils unlösbar verbunden ist und dass der zweite Biegefederabschnitt oder die zweite Biegefeder mit der Drehlager-Anschlusseinrichtung und/oder mit der Gegenmasse-Anschlusseinrichtung jeweils einstückig ausgebildet oder damit jeweils unlösbar verbunden ist.

Gemäß einem weiteren Aspekt ist auch bevorzugt, dass jede Biegefeder-Anordnung eine oder mehrere sog. Zusatz-Biegefedern umfasst, von denen jede an ihrem einen Federlängsende zwischen zwei an der Schwinger-Anschlusseinrichtung vorgesehenen Klemmteilen und an ihrem anderen Federlängsende zwischen zwei an der Gegenmasse-Anschlusseinrichtung vorgesehenen Klemmteilen eingespannt ist. Derartige Zusatz-Biegefedern können bevorzugt dazu dienen, um die Resonanzfrequenz so einzustellen, dass diese etwas oberhalb einer gewünschten Erregerfrequenz des Vibrationsantriebs liegt. Bevorzugt ist auch, dass die Biegefeder und die Zusatz-Biegefedern je einen in Federlängsrichtung gleichbleibenden Federquerschnitt aufweisen, wobei in Bezug auf jede Biegefeder bzw. Zusatz-Biegefeder vorzugsweise ihre in Federlängsrichtung gemessene Federlänge größer als eine in Federbreitenrichtung parallel zu der geometrischen Drehachse gemessene Federbreite und diese vorzugsweise größer als eine quer zu der Federlängsrichtung und quer zu der Federbreitenrichtung in Federdickenrichtung gemessene Federdicke ist, wobei vorzugsweise vorgesehen ist, dass die Federdicke in Federlängs- und in Federbreitenrichtung einheitlich ist. Insofern ist bevorzugt, dass es sich bei der Biegefeder und/oder bei den Zusatzbiegefedern um in sich ebene Federn aus Flachmaterial, vorzugsweise um in sich ebene oder gewählte Blattfedern, handelt. Vorzugsweise ist daran gedacht, dass sich zumindest in einem unbelasteten Zustand der Biegefeder-Anordnung die von der Federlängsrichtung und der Federbreitenrichtung der zwischen den Zusatz-Biegefedern angeordneten Biegefeder aufgespannte Biegefeder-Ebene flächenparallel zu und dazu in Querrichtung beabstandet von den Zusatzbiegefeder-Ebenen erstreckt, die jeweils von der Federlängsrichtung und von der Federbreitenrichtung der Zusatz-Biegefedern aufgespannt werden. Als zweckmäßig wird angesehen, dass sich auf beiden Seiten der durch die Drehlager-Anschlusseinrichtung hindurch verlaufenden, insofern zentralen Biegefeder, welche den ersten und den zweiten Biegefederabschnitt umfasst, eine gleich große Anzahl von Zusatz-Biegefedern erstreckt, welche mit der Drehlager-Anschlusseinrichtung keine Verbindung oder nur eine lose, ggf. im Vibrationsbetrieb auch nur zeitweilige Anlage aufweisen. Bspw. kann sich auf jeder Seite der insofern mittigen Biegefeder je eine oder je zwei (usw.) Zusatz-Biegefedern befinden. Sind auf der gleichen Seite der insofern mittigen Biegefeder mehrere Zusatz-Biegefedern angeordnet, sind diese vorzugsweise zueinander ebenenparallel, entweder aneinander anliegend, oder mittels Distanzhaltern beabstandet, gestapelt angeordnet.

Gemäß einem weiteren Aspekt ist bevorzugt, dass die Biegefeder, die sich mittig durch die Drehlager-Anschlusseinrichtung erstreckt, und/oder die Zusatz-biegefedern aus Metall oder aus Kunststoff, vorzugsweise aus faserarmiertem Kunststoff, dessen Fasern sich in oder im wesentlichen in Federlängsrichtung erstrecken, hergestellt ist. Bei dem Kunststoff kann es sich vorzugsweise, d. h. nicht notwendig, um Epoxydharz oder um einen Kunststoff auf Epoxydharzbasis handeln. Bspw. besteht auch die Möglichkeit, dass die mittige Biegefeder aus Metall hergestellt ist und die Zusatz-Biegefedern aus besagtem Kunststoff bestehen, der eine hohe Festigkeit und geringe Bruchneigung aufweist. Für ein günstiges Betriebsverhalten ist auch bevorzugt, dass das Gesamtgewicht des Schwingers dem Gesamtgewicht der Gegenmasse entspricht oder zumindest im wesentlichen entspricht. Dies kann bspw. bedeuten, dass der Gewichtsunterschied kleiner als 10 %, vorzugsweise kleiner als 5 % und weiter vorzugsweise kleiner als 1 % oder als 0,1 % ist. Bevorzugt ist, dass der Gewichtsunterschied möglichst klein ist.

Gemäß einem noch weiteren Aspekt ist bevorzugt, dass der Federwinkel, der zwischen der Federlängsrichtung der Biegefeder und einer quer zu der Förderrichtung orientierten Bezugsebene bzw. zu einer Vertikalebene aufgespannt wird, veränderbar einstellbar ist, wobei vorzugsweise an den zumindest zwei vorhandenen Biegefeder-Anordnungen jeweils der gleiche Federwinkel gewählt wird.

Betreffend das Grundgestell ist bevorzugt, dass daran zumindest zwei voneinander beabstandete Lagerorte vorgesehen sind, wobei an jedem Lagerort als Drehlagergegenmittel ein Paar zueinander fluchtende Lagerbohrungen ausgebildet ist, mittels denen die Drehlager-Anschlusseinrichtung drehbar gehalten ist, wobei vorzugsweise vorgesehen ist, dass die Drehlager-Anschlusseinrichtung an ihren beiden Längsenden als Drehlagermittel je einen lösbaren oder einstückig angeformten Gelenkzapfen aufweist, der drehbar in je eine Lagerbohrung greift. Das Grundgestell kann bevorzugt eine Basis, bei der es sich vorzugsweise um eine Grundplatte, wie bspw. um eine Bodenplatte, handelt, und eine Grundgestellbrücke umfassen, wobei die Grundgestellbrücke zwei voneinander beanstandete, vorzugsweise parallel zueinander verlaufende, Brückenlängsträger aufweist, die mittels einer Mehrzahl von Brückenstützen in einem Abstand über der Basis gehalten sind, wobei weiter bevorzugt ist, dass sich von den paarweise fluchtenden Drehlagergegenmitteln je eines in je einem der Brückenlängsträger befindet. Vorzugsweise verläuft die Haupterstreckungsrichtung der Brückenlängsträger parallel oder im wesentlichen parallel zu der Förderrichtung.

Betreffend den Vibrationsantrieb ist bevorzugt, dass dieser zumindest einen elektromagnetischen Magnetantrieb umfasst, der zumindest einen Elektromagneten und zumindest einen Anker aufweist, wobei der Elektromagnet an der Gegenmasse und der Anker an dem Schwinger oder alternativ der Elektromagnet an dem Schwinger und der Anker an der Gegenmasse befestigt ist, so dass sich zumindest in einem unerregten Ruhezustand des Elektromagneten zwischen dem Elektromagnet und dem Anker ein luftgefüllter Magnetspalt befindet. Ein Elektromagnet bewirkt in an sich bekannter Weise bei einer angelegten Wechselspannung ein mit der Spannungsfrequenz wechselndes Magnetfeld, das zu einer Kraft-Wechselwirkung mit dem Anker führt, so dass durch die zeitlich schwankende Anziehungskraft eine Schwingung resultiert. Zu diesem Zweck kann der Linear-Vibrationsförderer einen Wechselspannungs-Generator aufweisen.

Gemäß einem weiteren Aspekt ist bevorzugt, dass zwecks individueller Veränderbarkeit der Neigungsstellung bzw. des Federwinkels an den zumindest zwei Biegefeder-Anordnungen relativ zu einer Senkrechten durch die, vorzugsweise horizontale oder geneigte, Förderrichtung jeweils Befestigungsmittel vorgesehen sind, mittels denen sich der Befestigungsort der Biegefeder-Anordnung an dem Schwinger, vorzugsweise stufenlos und vorzugsweise entlang einer Bogensegmentkurve, wählen lässt, und mittels denen sich der Befestigungsort der Biegefeder-Anordnung an der Gegenmasse, vorzugsweise stufenlos und vorzugsweise entlang einer weiteren Bogensegmentkurve, wählen lässt, wobei vorzugsweise vorgesehen ist, dass die Weite des Magnetspaltes in einem unerregten Ruhezustand geometrisch unabhängig von der Wahl der Befestigungsorte ist. Als Federwinkel wird insofern auch der Winkel zwischen der Federlängsrichtung, also der Richtung der Haupt-Federbiegelinien, und einer senkrecht zur Förderrichtung und zu den geometrischen Drehachsen der Drehlager, insbesondere vertikal, verlaufenden Richtung bzw. Ebene verstanden. Vorzugsweise ist eine Ausgestaltung gewählt, bei der die Position von Schwinger und Gegenmasse nicht von der jeweiligen Wahl bzw. nicht von einer Änderung des Federwinkels beeinflusst wird.

Hinsichtlich des Schwingers ist bevorzugt, dass dieser zwei, vorzugsweise zueinander parallel, in Richtung der geometrischen Drehachsen der Drehlager voneinander beabstandete Schwingerlängsträger aufweist, zwischen denen die jeweilige Schwinger-Anschlusseinrichtung der Biegefeder-Anordnungen angeordnet ist, und in denen paarweise zueinander fluchtende, bogensegmentförmige Durchgangsnuten ausgebildet sind, wobei je eine lösbare Klemmschraube von außen durch je eine Durchgangsnut in je eine stirnseitige Gewindebohrung in der Schwinger-Anschlusseinrichtung eingeschraubt ist. Analog kann die Gegenmasse zwei, vorzugsweise zueinander parallel, in Richtung der geometrischen Drehachsen der Drehlager voneinander beabstandete, Gegenmasselängsträger aufweisen, zwischen denen die jeweilige Gegenmasse-Anschlusseinrichtung der Biegefeder-Anordnungen angeordnet ist und in denen paarweise zueinander fluchtende, bogensegmentförmige Durchgangsnuten ausgebildet sind, wobei je eine lösbare Klemmschraube von außen durch je eine Durchgangsnut in je eine stirnseitige Gewindebohrung in der Gegenmasse-Anschlusseinrichtung eingeschraubt ist. Die Schwingerlängsträger und die Gegenmasselängsträger erstrecken sich vorzugsweise parallel zu den Brücklängsträgern und/oder zu der Förderrichtung.

Die Einstellbarkeit des Federwinkels ermöglicht vorteilhaft eine Anpassung auf die speziellen Eigenschaften der Nutzmasse (Schwinger) und der Grundmasse (Gegenmasse). Um den Linear-Vibrationsförderer an unterschiedliche Förder-Anforderungen anzupassen, können die auf dem Schwinger montierbaren Aufbauten ausgetauscht werden. Damit ist häufig eine Veränderung der Gesamtmasse des Schwingers und auch von dessen Massenverteilung, d. h. der Schwerpunktlage, verbunden. Um zu erreichen, dass die Vibrations- bzw. Schwingungsbewegungen des Schwingers (nach wie vor) möglichst symmetrisch gegenläufig zu den Vibrations- bzw. Schwingungsbewegungen der Gegenmasse verlaufen, muss daher häufig nach einem solchen Austausch/Veränderung der Aufbauten eine erneute Angleichung der beiden Massen von Schwinger und Gegenmasse aneinander erfolgen, und zwar betreffend das jeweilige Gesamtgewicht und die Lage der beiden Schwerpunkte. Um dies zu erreichen, können an dem Schwinger und/oder an der Gegenmasse Kontergewichte angebracht sein, die sich bedarfsweise abnehmen oder ergänzen lassen. Dabei kann beispielsweise empirisch so vorgegangen werden, dass mittels eines CAD-Computerprogrammes zunächst die jeweilige aktuelle Gesamtmasse des Schwingers und der Gegenmasse und die Koordinaten der beiden Schwerpunkte berechnet und mit gewünschten Massen- und Schwerpunkt-Koordinaten verglichen werden. In einem nächsten Schritt können zunächst rechnerisch einzelne oder mehrere Kontergewichte an dem Schwinger und/oder der Gegenmasse abgenommen und/oder ergänzt werden und dann mittels des CAD-Computerprogrammes erneut die Gesamtgewichte und jeweiligen Schwerpunkt-Koordinaten bestimmt und mit den Sollwerten verglichen werden. In einem solchen mehrstufigen Verfahren können die Gesamtmassen und die Schwerpunkt-Koordinaten bis zu einer gewünschten Genauigkeit an die Idealvorgaben angenähert oder schließlich daran angeglichen werden. Alternativ ist bspw. auch denkbar, sogleich in nur einem Schritt des Verfahrens mittels eines CAD-Computerprogrammes die zur Erzielung der idealen Abstimmung zu entfernenden oder zu ergänzenden Kontergewichte sowie deren Position zu bestimmen und diese Anpassungen an dem Linear-Vibrationsförderer vorzunehmen. Zusätzlich zu der Veränderbarkeit der Kontergewichte bildet die schon erläuterte Verstellbarkeit des sog. Federwinkels einen weiteren Einstellparameter für das Vibrations-Betriebsverhalten des Förderers. Insbesondere kann durch eine Abstimmung des Federwinkels auf die Gesamtmassen und die Schwerpunkt-Koordinaten von Schwinger und Gegenmasse auch die gegenläufige Symmetrie zwischen den Schwingungsbewegungen von Schwinger und Gegenmasse und die Bewegungsform der zu fördernden Kleinteile beeinflusst werden. Auch die Einstellung des Federwinkels kann empirisch erfolgen, kann aber auch bspw. mittels eines Computerprogrammes vereinfacht werden. Bei der Einstellung wird eine Abstimmung bevorzugt, bei der sich der Schwinger in Förderrichtung über seine ganze Länge hinweg gleichartig in Horizontal-und Vertikalrichtung vibrierend bewegt, so dass auch die Wurfbewegung bzw. der Förderfluss der Kleinteile in Längsrichtung gleichmäßig ist. Zweckmäßig ist vorgesehen, dass an der Gegenmasse Kontergewicht im Bereich der Eingabeseite des Linear-Vibrationsförderers, vorzugsweise stirnendseitig und/dazu oberseitig, angeordnet ist und dass an dem Schwinger Kontergewicht im Bereich der Ausgabeseite des Linear-Vibrationsförderers, vorzugsweise stirnseitig und/oder dazu unterseitig, angeordnet ist. Betreffend die Biegefeder-Anordnungen ist bevorzugt, dass an jeder Biegefeder-Anordnung die Mittellinien der Gewindebohrungen der Schwinger-Anschlusseinrichtung und die Mittellinien der Gewindebohrungen der Gegenmasse-Anschlusseinrichtung sowie die geometrische Drehachse des zugeordneten Drehlagers in einer gemeinsamen geometrischen Ebene liegen.

Die vorzugsweise als Biegefedern bzw. Zusatz-Biegefedern vorgesehenen Federn aus Flachmaterial, insbesondere Blattfedern, wirken jeweils als Biegefedern einer bestimmten Federsteifigkeit. Insofern ist bevorzugt, dass jede Biegefeder-Anordnung in sich in mehrfacher Hinsicht symmetrisch ausgebildet ist. Bevorzugt ist einerseits, dass die bzgl. der geometrischen Drehachse mittige Biegefeder bzw. die beiden insofern mittigen Biegefederabschnitte auf beiden Seiten des Drehlagers die gleiche Federsteifigkeit aufweisen und insbesondere gleich ausgestaltet sind und alternativ oder kombinativ, dass eine oder mehrere Zusatz-Biegefedern, die sich auf der einen Seite der mittigen Biegefeder bzw. der beiden mittigen Biegefederabschnitte erstrecken, im Vergleich zu einer oder mehreren Zusatz-Biegefedern, die sich auf der gegenüberliegenden Seite der mittigen Biegefeder bzw. Biegefederabschnitte erstrecken, die zueinander gleiche resultierende Federsteifigkeit, insbesondere die gleiche Gestaltung aufweisen. Hinsichtlich der zumindest zwei Biegefeder-Anordnungen ist bevorzugt, dass daran für den Betrieb der jeweils gleiche Federwinkel eingestellt ist.

Aus der Beschreibung wird deutlich, dass der erfindungsgemäße Linear-Vibrationsförderer eine Schwingungsübertragung auf das Grundgestell wirksam vermeidet. Der insgesamt vergleichsweise steife bzw. starre Aufbau ermöglicht auch die starre Montage von Führungsanschlusselementen zu angrenzenden Einrichtung auf oder an dem Grundgestell. Die Erfindung ermöglicht vielfältige Schienenkonstruktionen, bei denen sich auf die beschriebene Weise eine Symmetrie zwischen der Masse des Schwingers und der Gegenmasse erreichen lässt. Die Massen des Schwingers und der Gegenmasse werden möglichst gleich schwer gewählt, weil die Federn bzw. Biegefederanordnungen genau mittig im Drehpunkt aufgenommen sind. Der neutrale Punkt der mittigen Biegefeder bzw. Biegefeder-Anordnungen ist als Drehpunkt in einem Drehlager ausgelegt. Im Vergleich zu bekannten Linear-Vibrationsförderern kann die zur Förderung dienende Schiene bei dem erfindungsgemäßen Linear-Vibrationsförderer auf vergleichsweise vielfältige Weise nach vorgegebenen Regeln konstruiert werden. Da der Schwinger und die Gegenmasse bevorzugt über- und untereinander (d. h. nicht nebeneinander) liegen, entstehen keine Querkräfte und auch keine davon ausgehenden Querschwingungen. Der erfindungsgemäße Linear-Vibrationsförderer wird vorteilhaft nicht von angekoppelten Massen, auf denen er abgestellt oder wahlweise fest angebracht ist, beeinflusst. Bspw. verändert sich das Laufverhalten nicht, wenn er auf einem Traggestell oder allgemein einer Masse mit einem Gewicht von bspw. 5 kg oder mit einem Gewicht von bspw. 50 kg angekoppelt würde. Je nach angekoppelter unterschiedlicher zur Förderung dienender Schiene kann auch der Federwinkel zur Erzielung eines gewünschten Betriebsverhaltens eingestellt bzw. verändert werden.

Die Erfindung wird nachfolgend mit Bezug auf die beigefügten Figuren, welche bevorzugte Ausführungsbeispiele angeben, weiter beschrieben. Im Einzelnen zeigt:
- Fig. 1: perspektivisch einen erfindungsgemäßen Linear-Vibrationsförderer gemäß einem ersten bevorzugten Ausführungsbeispiel;
- Fig. 2: eine Seitenansicht in Blickrichtung II gemäß Fig. 1;
- Fig. 3: perspektivisch eine Biegefeder-Anordnung des erfindungsgemäßen Linear-Vibrationsförderers gemäß Fig.1, demgegenüber in Vergrößerung;
- Fig. 4: in einer Explosionsansicht die Biegefeder-Anordnung gemäß Fig. 3;
- Fig. 4a: perspektivisch die eine der beiden Klemmbacken der DrehlagerAnschlusseinrichtung, jedoch in zu Fig. 4 umgekehrter Betrachtungsrichtung;
- Fig. 5: eine Ansicht der Biegefeder-Anordnung gemäß Fig. 3 in dortiger Blickrichtung V;
- Fig. 6: einen Längsschnitt durch die Biegefeder-Anordnung entlang der in Fig. 5 angegebenen Schnittebene VI - VI;
- Fig. 7: einen Querschnitt durch die Biegefeder-Anordnung gemäß Fig. 5 entlang der dort angegebenen Schnittebene VII - VII;
- Fig. 8: ein weiteres bevorzugtes Ausführungsbeispiel einer BiegefederAnordnung in einem Längsschnitt entlang einer zu Fig. 6 analogen Schnittführung;
- Fig. 9: ein noch weiteres bevorzugtes Ausführungsbeispiel einer Biegefeder-Anordnung in einem Längsschnitt entlang einer ebenfalls zu Fig. 6 analogen Schnittführung;
- Fig. 10: einen Schnitt entlang Schnittlinie X - X gemäß Fig. 2;
- Fig. 10a: ebenfalls einen Teilschnitt entlang Schnittlinie X - X in Fig. 2, jedoch mit in den Linear-Vibrationsförderer eingesteckten Zentrierbolzen;
- Fig. 11: eine Schnittansicht entlang Schnittlinie XI - XI in Fig. 2;
- Fig. 12: einen Längsschnitt entlang Schnittlinie XII - XII gemäß Fig. 11;
- Fig. 13: einen Teilschnitt entlang Schnittebene XIII - XIII in Fig. 2;
- Fig. 14: eine Ausschnittvergrößerung von Detail XIV aus Fig. 12;
- Fig. 14a: die in Fig. 14 gezeigte Anordnung, jedoch mit erregtem elektromagnetischem Magnetantrieb und verformter BiegefederAnordnung;
- Fig. 14b: eine zu den Fig. 14, 14a vergleichbare Ausschnittvergrößerung, jedoch bei zu Fig. 14a gegenläufiger Verformung der BiegefederAnordnung;
- Fig. 15: schematisch vereinfacht eine während des Vibrationsantriebs gemäß den Fig. 14,14a und 14b resultierende SchwingungsEigenform der mittigen Biegefeder an einer BiegefederAnordnung;
- Fig. 16: einen Linear-Vibrationsförderer gemäß einem weiteren bevorzugten Ausführungsbeispiel, in einem zu Fig. 11 analogen Teilschnitt und
- Fig. 17: einen Teilausschnitt einer Seitenansicht in Blickrichtung XVII gemäß Fig.16.

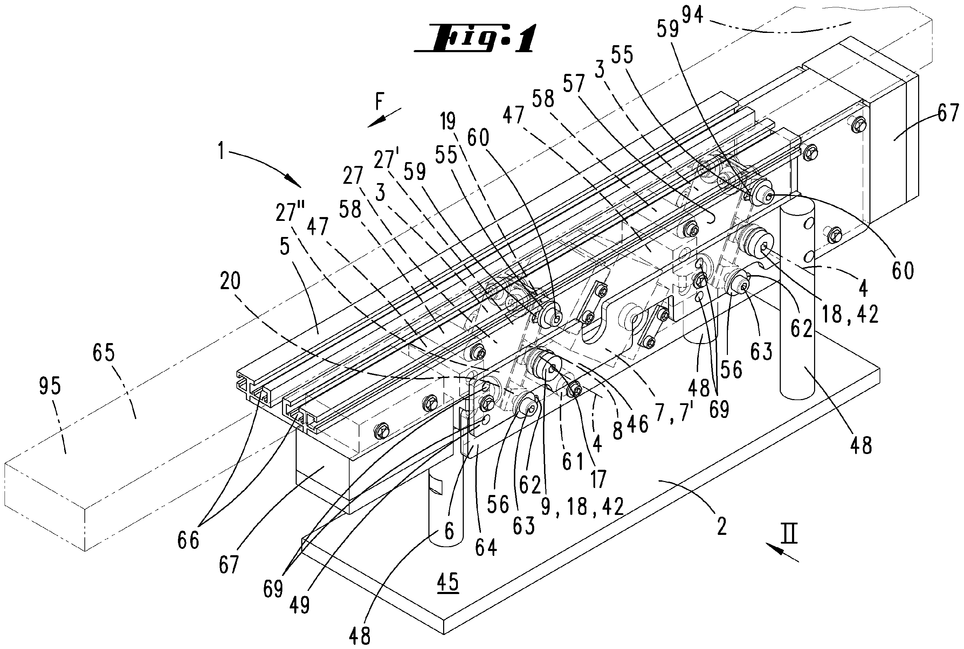

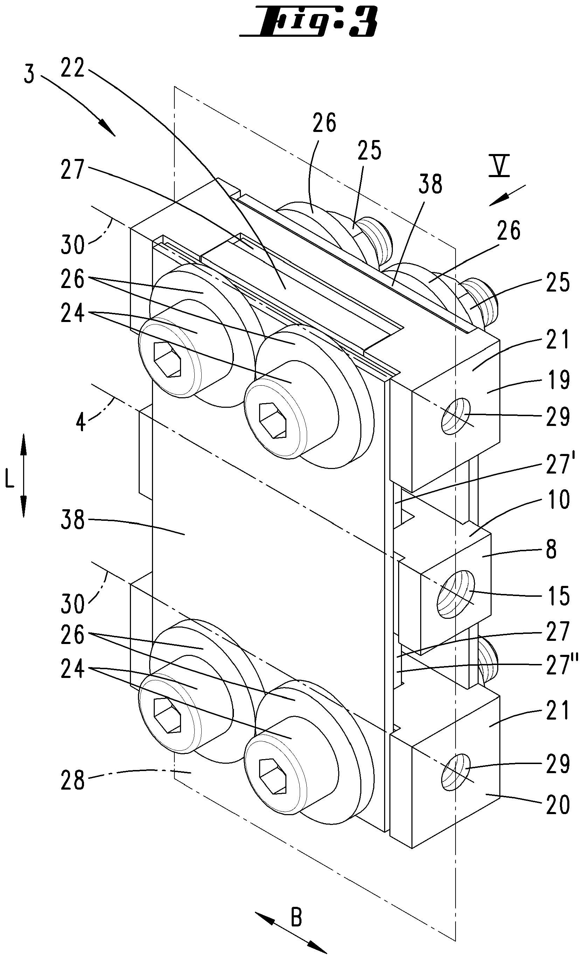

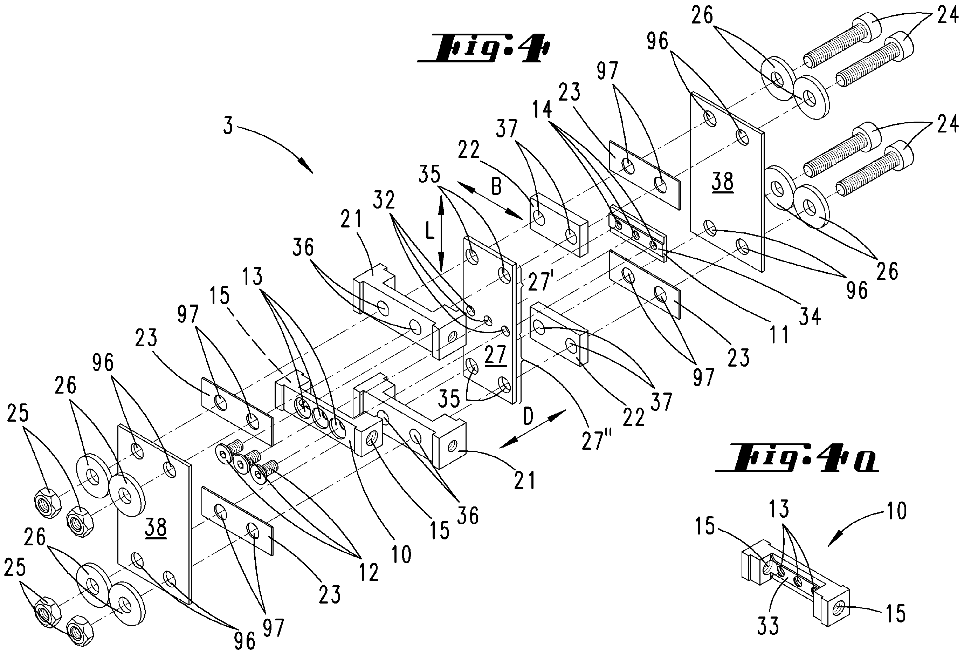

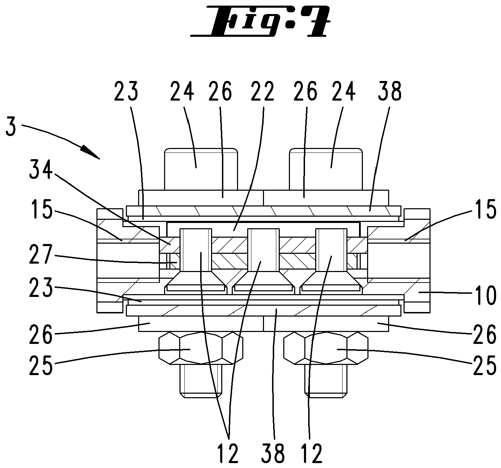

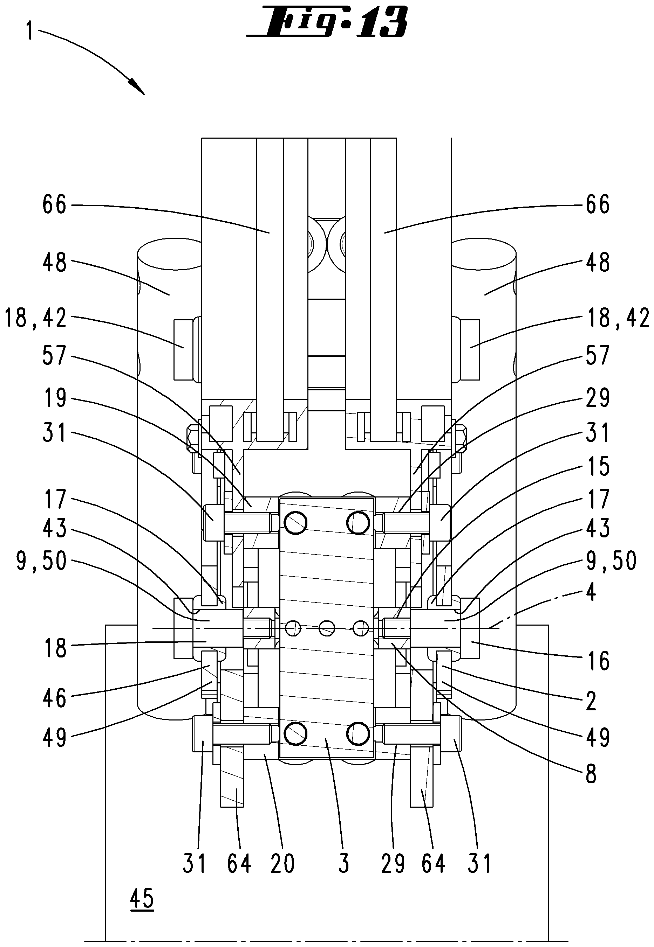

Mit Bezug auf die Figuren 1 bis 7 und 10 bis 13 wird ein erfindungsgemäßer Linear-Vibrationsförderer 1 gemäß einem ersten bevorzugten Ausführungsbeispiel vorgestellt. Dieser umfasst ein insgesamt mit dem Bezugszeichen 2 bezeichnetes Grundgestell, an dem zwei voneinander in Richtung parallel zu der Förderrichtung F des Linear-Vibrationsförderers beabstandete Biegefeder-Anordnungen 3 an je einer mittigen Biegefeder auf deren halber Länge um je eine horizontale, zu der Förderrichtung F quer orientierte horizontale geometrische Drehachse 4 verdrehbar gelagert sind. Der Linear-Vibrationsförderer 1 umfasst weiterhin einen als Baugruppe insgesamt mit 5 bezeichneten Schwinger und eine als weitere Baugruppe insgesamt mit 6 bezeichnete Gegenmasse sowie einen insgesamt mit 7 bezeichneten Vibrationsantrieb. Jede Biegefeder-Anordnung 3 besitzt eine Drehlager-Anschlusseinrichtung 8, die mit Drehlagermitteln 9 verbunden ist. In dem Beispiel umfasst die Drehlager-Anschlusseinrichtung 8 eine erste Klemmbacke 10, eine zweite Klemmbacke 11 und drei Klemmschrauben 12, welche durch Durchgangsbohrungen 13 in der ersten Klemmbacke 10 hindurchgesteckt und in Gewindebohrungen 14 in der zweiten Klemmbacke 11 einschraubbar sind. Die erste Klemmbacke 10 weist an den beiden bzgl. ihrer Längsrichtung vorhandenen Stirnflächen je eine Gewindebohrung 15 auf, deren geometrische Längsmittellinien miteinander fluchten und im montierten Zustand mit der geometrischen Drehachse 4 zusammenfallen. Figur 13 zeigt dazu in Schnittansicht, dass in jede Gewindebohrung 15 eine Schaftschraube 16 eingeschraubt ist, deren zylindrischer Schaftabschnitt das Drehlagermittel 9 bildet. Dem jeweils zugeordnet sind an dem Grundgestell Drehlagergegenmittel 17 zur Ausbildung eines Drehlagers 18 um die geometrische Drehachse 4 vorhanden. Dabei handelt es sich um zwei auf gegenüberliegenden Seiten des Grundgestells 2, zueinander fluchtend in Wandbohrungen eingesetzte Lagerbuchsen, durch welche die Drehlagermittel 9 praktisch spielfrei, jedoch drehbar hindurchführen. Jede Biegefeder-Anordnung 3 weist weiterhin eine Schwingfeder-Anschlusseinrichtung 19 und eine dazu in dem Beispiel baugleiche Gegenmasse-Anschlusseinrichtung 20 auf. Wie Figur 4 veranschaulicht, umfassen diese jeweils eine erste Klemmbacke 21, eine zweite Klemmbacke 22, zwei Distanzscheiben 23, je zwei Klemmschrauben 24, je zwei Muttern 25 und jeweils zugeordnete Unterlegscheiben 26. Jede Biegefeder-Anordnung 3 umfasst eine mittige, d. h. durch die geometrische Drehachse 4 verlaufende Biegefeder 27. Diese ist aus dünnwandigem, faserarmierten Kunststoffmaterial mit rechteckiger Randkontur hergestellt. Die Klemmbacken 10, 11 und 21, 22 sind in ihrer Geometrie so auf die Biegefeder 27 abgestimmt, dass sich die in Figur 3 gezeigte Mittelebene 28, welche durch die geometrische Drehachse 4 des Drehlagers 18 führt, auch mittig durch die Biegefeder 27 hindurch erstreckt. Auch die beiden Klemmbacken 21, die (wie weitere Komponenten) vereinfachend aufgrund ihrer gleichen Bauform mit gleichen Bezugszeichen versehen sind, weisen an ihren einander gegenüberliegenden Stirnflächen je eine Gewindebohrung 29 auf, deren geometrische Mittellinien zueinander paarweise fluchten und insofern paarweise auf Mittellinien 30 liegen, die parallel zueinander und parallel zu der geometrischen Drehachse 4 sind und in der gedachten geometrischen Mittelebene 28 der Biegefeder-Anordnung 3 liegen. Im montierten Zustand (vgl. auch Figur 13) ist die Schwinger-Anschlusseinrichtung 19 mittels zwei Klemmschrauben 31, die in die Gewindebohrungen 29 eingeschraubt sind, drehsteif an dem Schwinger 5 befestigt, und die Gegenmasse-Anschlusseinrichtung 20 ist mittels zweier entsprechender Klemmschrauben 31, die in die dortigen Gewindebohrungen 29 eingreifen, drehsteif an der Gegenmasse 6 befestigt.

In Bezug auf bzw. parallel zu der Mittelebene 28 der Biegefeder-Anordnung 3 wird zwischen einer parallel zu der geometrischen Drehachse orientierten Federbreitenrichtung B und einer senkrecht dazu verlaufenden Federlängsrichtung L unterschieden. Die zu diesen beiden Richtungen quer verlaufende Federdickenrichtung wird mit D bezeichnet. Bspw. die Figuren 3 bis 5 veranschaulichen, dass die Drehlager-Anschlusseinrichtung 8, in Federlängsrichtung L betrachtet, mittig zwischen der Schwinger-Anschlusseinrichtung 19 und der Gegenmasse-Anschlusseinrichtung 20 in einem jeweils gleich großen Abstand A beabstandet ist.

Die Biegefeder 27 setzt sich in dem Beispiel einstückig aus einem ersten Biegefederabschnitt 27' und aus einem gleich langen zweiten Biegefederabschnitt 27" zusammen (vgl. Figur 4). Der erste Biegefederabschnitt 27' erstreckt sich von der Drehlager-Anschlusseinrichtung 8 zu der Schwinger-Anschlusseinrichtung 19, und der zweite Biegefederabschnitt 27" erstreckt sich in der gleichen Federbezugsebene, also ebenfalls mittensymmetrisch zu der Mittelebene 28, von der Drehlager-Anschlusseinrichtung 8 in die entgegengesetzte Richtung zu der Gegenmasse-Anschlusseinrichtung 20.

Die aus den Biegefederabschnitten 27' und 27" einstückige gebildete Biegefeder 27 besitzt in Federlängsrichtung L betrachtet an mittiger Position drei zueinander in Federbreitenrichtung B gleichmäßig beabstandete Durchgangsbohrungen 32. Die Biegefeder 27 erstreckt sich durch einen Zwischenraum zwischen der ersten Klemmbacke 10 und der zweiten Klemmbacke 11,wobei die Klemmschrauben 12 durch die Durchgangsbohrungen 32 hindurch in die Gewindebohrungen 14 hindurchführen, so dass sich die Drehlager-Anschlusseinrichtung 8 mittels Festspannen der Klemmschrauben 12 an der Biegefeder 27 befestigen lässt. In dem Beispiel wirkt die Klemmkraft im Bereich je einer in sich ebenen Klemmfläche 33, 34 der beiden Klemmbacken 10, 11 (vgl. die Figuren 4, 4a) auf die Biegefeder 27 ein. Obwohl die Erstreckung der beiden Klemmflächen 33, 34 in Richtung der Federlängsrichtung L geringer als die Erstreckung der Klemmbacken 10, 11 ist, ist doch angesichts der noch gegebenen Klemmbreite noch von einer beidseitigen bzw. sandwichartigen Einspannung der Biegefeder 27 zu sprechen, wobei aufgrund der beschriebenen mittigen Anordnung zugleich bzw. gemeinsam eine beidseitige Einspannung des ersten Biegefederabschnitts 27' und des zweiten Biegefederabschnitts 27" verwirklicht ist. Die Biegefeder 27 weist an jedem ihrer beiden Längsenden je zwei weitere, in Federbreitenrichtung B beabstandete Durchgangsöffnungen 35 auf, wobei jedes dieser Längsenden in je einen Zwischenraum zwischen je einer Klemmbacke 21 und einer Klemmbacke 22 eintritt. Jede erste Klemmbacke 21 besitzt zwei Durchgangsöffnungen 36, und jede zweite Klemmbacke 22 besitzt zwei Durchgangsöffnungen 37, die mit den Durchgangsöffnungen 35 fluchten. Mittels durch diese Durchgangsbohrungen 35-37 hindurchgeführter Klemmschrauben 24 und Muttern 25 ist die Schwinger-Anschlusseinrichtung 19 und die Gegenmasse-Anschlusseinrichtung 20 an je einem Längsende der Biegefeder 27 festgespannt, wobei wiederum zufolge der jeweils ebenen Klemmflächen je eine zweiseitige bzw. von zwei gegenüberliegenden Seiten wirksame Einspannung resultiert. Insofern ist die Biegefeder 27 nicht gelenkig, sondern jeweils biegesteif an der Schwinger-Anschlusseinrichtung 19 und der Gegenmasse-Anschlusseinrichtung 20 angeschlossen.

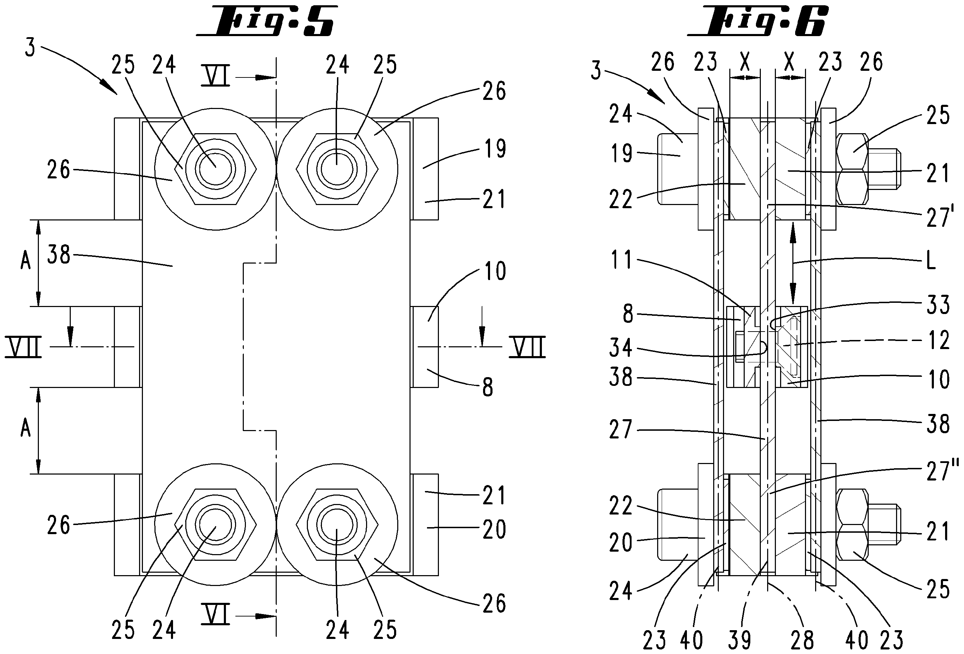

Bei dem gewählten Ausführungsbeispiel umfasst jede Biegefeder-Anordnung 3 zusätzlich zu der Biegefeder 27 zwei Zusatz-Biegefedern 38, die beide zueinander identisch ausgeführt sind. Die Zusatz-Biegefedern 38 sind ebenfalls aus Kunststoff-Flachmaterial mit einheitlicher Materialstärke hergestellt, besitzen eine rechteckige Randkontur, und bezüglich der Federlängsrichtung L sind an beiden Längsenden je zwei in Federbreitenrichtung B voneinander beabstandete Durchgangsbohrungen 96 vorgesehen, deren Ausrichtung wiederum Figur 4 veranschaulicht. Jedes Längsende ist dabei zwischen einer Distanzscheibe 23 und zwei Unterlegscheiben aufgenommen, welche gemeinsam als Klemmteile auf beiden Federseiten zusammenwirken. Die Distanzscheiben 23 stützen sich von außen gegen die Klemmbacken 21, 22 ab, wobei ihre Durchgangsbohrungen 97 ebenso wie die gelochten Unterlegscheiben 26 von den Klemmschrauben 24 durchgriffen werden, so dass die in Figur 4 explosionsartig gezeigte Biegefeder-Anordnung 3, welche die Biegefeder 27 und die beiden dazu parallel beabstandeten Zusatz-Biegefedern 38 umfasst, mittels der vier Klemmschrauben 24 und der zugehörigen Muttern 25 insgesamt zusammengespannt werden kann. Mittels dieser Klemmung wird jede Zusatz-Biegefeder 38 an ihrem einen Federlängsende an der Schwinger-Anschlusseinrichtung 19 und an ihrem anderen Federlängsende an der Gegenmasse-Anschlusseinrichtung 20 drehsteif eingespannt. Die Zusatz-Biegefedern 38 sind nicht an der Drehlager-Anschlusseinrichtung fixiert. Figur 6 veranschaulicht, dass die von der Biegefeder 27 aufgespannte Biegefederebene 39, welche mit der Mittelebene 28 übereinstimmt, flächenparallel zu und dazu in Querrichtung beabstandet von einer jeweiligen Zusatzbiegefeder-Ebene 40 erstreckt, die sich jeweils flächenparallel mittig durch je eine Zusatz-Biegefeder 38 erstreckt. Der senkrecht zu der Mittelebene 28 gemessene Seitenabstand zwischen der Biegefeder 27 und jeder der beiden Zusatz-Biegefedern 38 ist in Figur 6 mit X bezeichnet und stimmt für beide Zusatz-Biegefedern 38 überein.

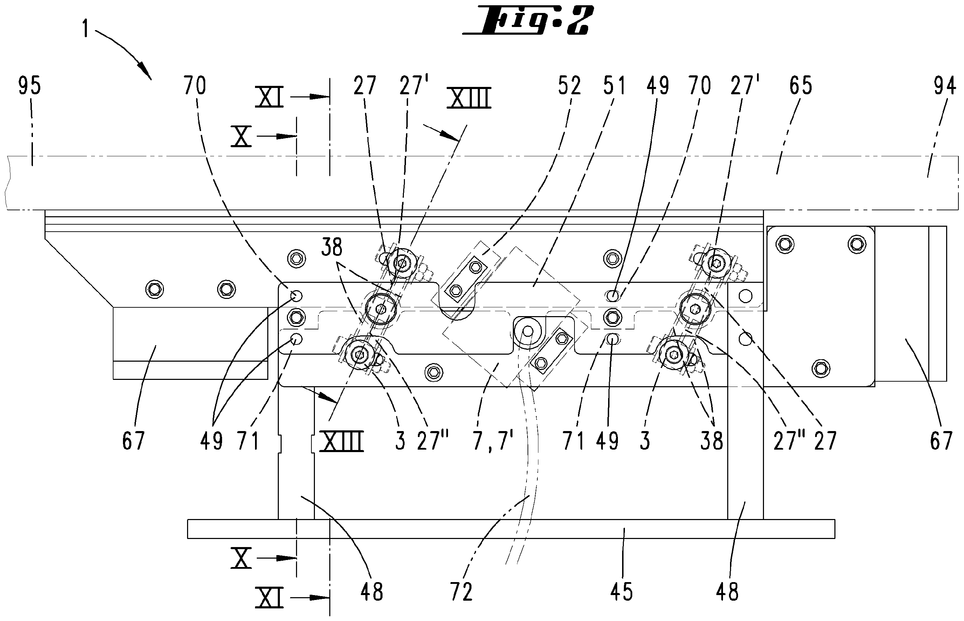

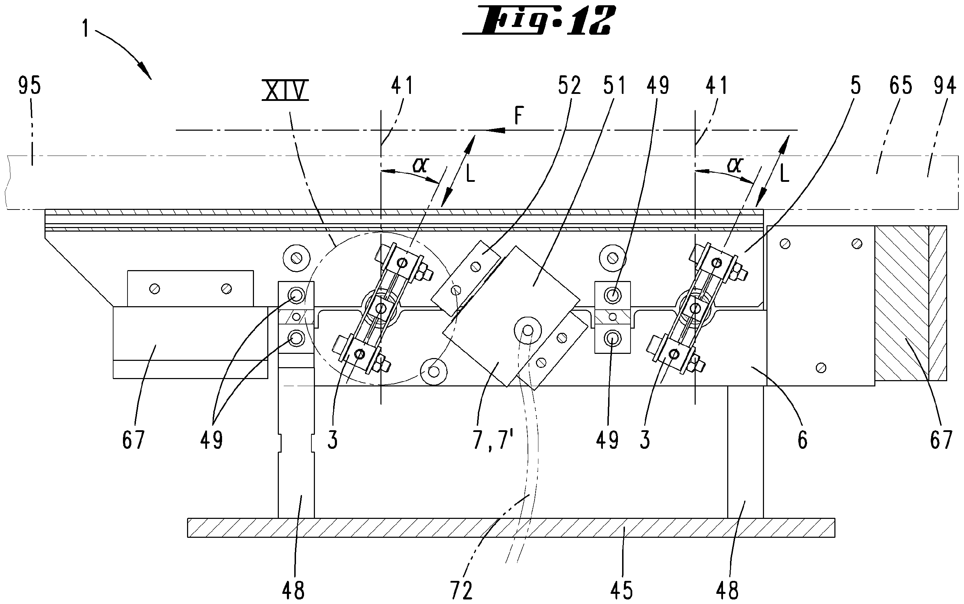

Wie bspw. Figur 12 zeigt, sind die beiden Biegefeder-Anordnungen 3 so angeordnet, dass die Federlängsrichtungen L der Biegefedern 27 geneigt zu einer jeweils quer zu der Förderrichtung F orientierten Bezugsebene 41 ausgerichtet sind. Der zwischen den Bezugsebenen 41 und der Federlängsrichtung L eingeschlossene Federwinkel ist mit α bezeichnet und an den beiden Biegefeder-Anordnungen 3 gleich groß gewählt. Wie bspw. die Figuren 1 und 2 zeigen, sind bei dem Ausführungsbeispiel die Lagerorte 42 der Drehlager 18 in einer zu der Förderrichtung F parallelen Richtung voneinander beabstandet, wobei an jedem Lagerort 42 als Drehlagergegenmittel 17 ein Paar zueinander fluchtende Lagerbohrungen 43 in zwei Lagerbuchsen 44 vorgesehen ist. In näherer Einzelheit ist vorgesehen, dass das Grundgestell 2 eine Basis 45, bei der es sich in dem Beispiel um eine vergleichsweise dünnwandige Bodenplatte handelt, und eine Grundgestellbrücke 46 umfasst, welche zwei voneinander beabstandete, zueinander parallel verlaufende Brückenlängsträger 49 aufweist. Diese werden mittels dazu quer verlaufenden Zwischenträgern 47 in einem gewünschten Querabstand gehalten und in dem Beispiel mittels drei Brückenstützen 48 in einem Abstand oberhalb der Basis 45 getragen. An jedem der beiden Drehlager 18 befindet sich je ein Drehlagergegenmittel 17 bzw. je eine Lagerbuchse 44 an je einem der Brückenlängsträger 49. Jede Drehlager-Anschlusseinrichtung 8 umfasst an ihren beiden Längsenden als Drehlagermittel 9 je einen daran angeschraubten Gelenkzapfen 50, bei dem es sich um den zylindrischen Schaftabschnitt der Schaftschrauben 16 handelt und der drehbar in je eine Lagerbohrung 43 eingreift, so dass jede Drehlager-Anschlusseinrichtung 8 relativ zu dem Grundgestell 2 um die geometrische Drehachse 4 drehbar ist.

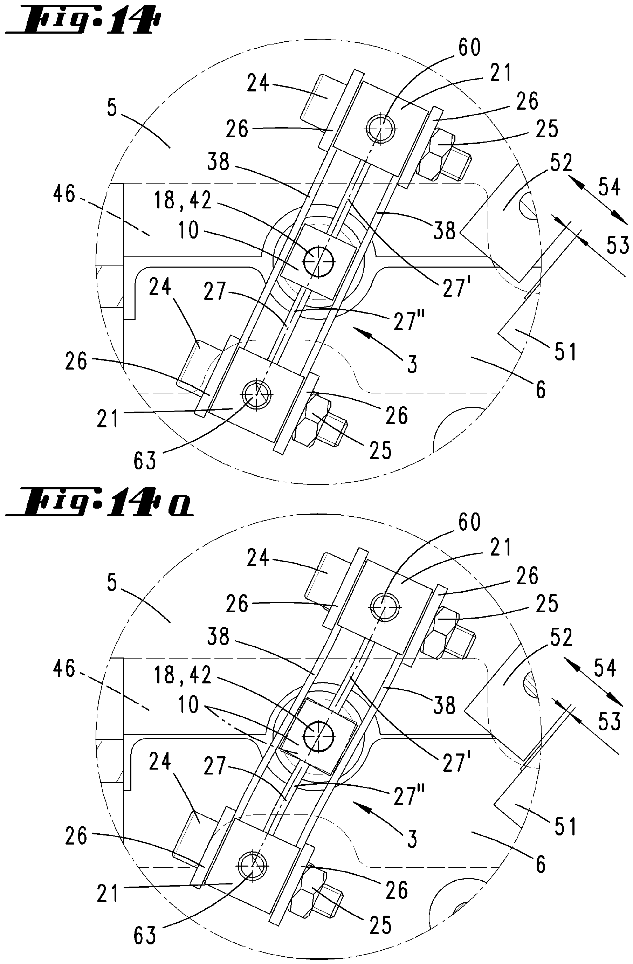

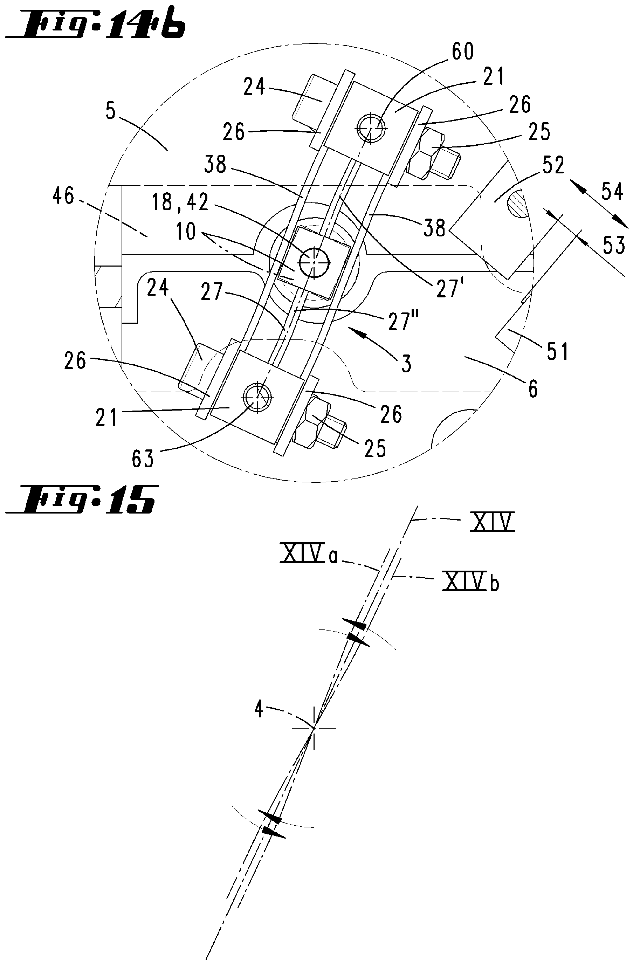

In dem Ausführungsbeispiel umfasst der Vibrationsantrieb 7 einen elektromagnetischen Magnetantrieb 7', der einen an der Gegenmasse 6 befestigten Elektromagneten 51 und einen an dem Schwinger 5 befestigten Anker 52 aufweist. In den Figuren 12 und 14 ist dargestellt, dass sich in einem unerregten Ruhezustand des Elektromagneten 51 zwischen diesem und dem Anker 52 ein luftgefüllter Magnetspalt 53 befindet. Der Elektromagnet 51 und der Anker 52 wirken in an sich bekannter, eingangs beschriebener Weise zusammen, um den Schwinger 5 und die Gegenmasse 6 relativ zueinander zu Vibrationen bzw. Schwingungen anzuregen. Entsprechend zeigen die Figuren 12 und 14, dass im Ruhezustand, d. h. bei ausgeschaltetem Elektromagnet 51, zwischen diesem und dem Anker 52 ein Magnetspalt 53 in Richtung 54 der Relativbewegung zwischen Elektromagnet 51 und Anker 52 verbleibt.

Um den Federwinkel α der Biegefeder-Anordnungen 3 relativ zu den zu der Förderrichtung F senkrechten Bezugsebenen 41 stufenlos verändern zu können, sind Befestigungsmittel 55, 56 vorgesehen, mittels denen sich der Befestigungsort der Biegefeder-Anordnung 3 an dem Schwinger stufenlos wählen lässt und mittels denen sich der Befestigungsort der Biegefeder-Anordnung 3 an der Gegenmasse 6 ebenfalls stufenlos wählen lässt. In weiterer Einzelheit ist vorgesehen, dass der Schwinger 5 zwei Schwingerlängsträger 57 aufweist, die mittels dazu quer verlaufenden Zwischenträgern 58 parallel verlaufend beabstandet sind. Darin sind paarweise zueinander fluchtende, bogensegmentförmige Durchgangsnuten 59 ausgebildet, durch die von außen je eine lösbare Klemmschraube 60 in je eine stirnseitige Gewindebohrung 29 der Schwinger-Anschlusseinrichtung 19 eingeschraubt ist, so dass die Schwinger-Anschlusseinrichtung 19 drehsteif mit dem Schwinger 5 verbunden ist. An dem in Blickrichtung von Figur 1 links verdeckt (und daher gestrichelt) erkennbaren Zwischenträger 58 greift unterseitig eine Brückenstütze 48 an. Die beiden weiteren, in Blickrichtung rechts angeordneten Brückenstützen 48 sind unmittelbar mit den Schwingerlängsträgern 57 verschraubt. Die Gegenmasse 6 weist zwei Gegenmasselängsträger 64 auf, welche mittels eines oder mehrerer, dazu quer orientierter Zwischenträger 61 zueinander parallel verlaufend und beabstandet gehalten werden. Zwischen diesen ist die jeweilige Gegenmasse-Anschlusseinrichtung 20 der Biegefeder-Anordnungen 3 angeordnet. Dieser jeweils lagemäßig zugeordnet sind in den Gegenmasselängsträgern 64 zueinander paarweise fluchtende, bogensegmentförmige Durchgangsnuten 62 ausgebildet, wobei je eine lösbare Klemmschraube 63 von außen durch je eine Durchgangsnut 62 in je eine stirnseitige Gewindebohrung 29 in der Gegenmasse-Anschlusseinrichtung 20 eingeschraubt ist, so dass diese mit der Gegenmasse 6 drehsteif, jedoch lösbar verbunden ist. Die Position und die Radien der bogensegmentförmigen Durchgangsnuten 59, 62 sind in der Weise auf die Abmessungen der Biegefeder-Anordnungen 3 in Federlängsrichtung F abgestimmt, dass eine Veränderung des Federwinkels α innerhalb des von den Durchgangsnuten 59, 62 vorgegebenen Verstellbereiches zu keiner Änderung der Relativlage zwischen Grundgestell 2, Schwinger 5 und Gegenmasse 6 führt.

Die Figuren 14,14 a und 14b veranschaulichen schematisch vereinfacht verschiedene Momentan-Betriebszustände. Figur 14 zeigt einen Betriebszustand, bei dem der Vibrationsantrieb 7 ausgeschaltet und die Biegefeder 27 und Zusatz-Biegefedern 38 undeformiert sind. Diese Situation entspricht auch dem Schwingungs-Nulldurchgang. Figur 14a zeigt einen abweichenden momentanen Betriebszustand, bei dem die von einer angelegten elektrischen Wechselspannung bewirkte Anziehungskraft zwischen dem Elektromagnet 51 und dem Anker 52 gerade eine Verkleinerung des luftgefüllten Magnetspalts 53 bewirkt, in dessen Folge der Schwinger 5 und die Gegenmasse 6 relativ zueinander bewegt, folglich einander angenähert, und demzufolge die Biegefeder 27 und die beiden Zusatz-Biegefedern 38 entlang ihrer Längsrichtungen bzw. Biegelinien verbogen werden. Figur 14b zeigt einen noch weiteren Momentanzustand, in welchem im Vergleich zu Figur 14 der Magnetspalt 53 vergrößert ist. Dies kann, abhängig vom Typ des gewählten Magnetantriebs, eine bloße Folge des elastischen Rückfederns der Biegefeder 27 und der Zusatz-Biegefedern 38 sein oder (je nach gewähltem Typ des Elektromagneten) durch eine zeitweilige Abstoßungskraft zwischen dem Elektromagnet 51 und dem Anker 52 unterstützt werden. Die Biegefeder 27 und die Zusatz-Biegefedern 38 sind hier gegenläufig zu Figur 14 verbogen. Der Schwinger 5 hat sich im Vergleich zu Figur 14 nach schräg oben bewegt und dabei seinen Abstand von der Gegenmasse 6, die sich diagonal gegenläufig nach schräg unten bewegt hat, vergrößert. Figur 15 zeigt, schematisch stark vereinfacht, ein Ersatzbild für die Biegefeder 27. Es wird deutlich, dass die Biegefeder 27 während des Vibrations- bzw. Schwingbetriebs an ihrem Durchgang durch die geometrische Drehachse 4 nur eine oszillierende Rotation, d. h. ohne Translationsanteil, ausführt. Die Eigenform besitzt dort einen Schwingungsknoten. Die Drehschwingung kann über das Drehlager 18 vorteilhaft nicht auf das Grundgestell 2 übertragen werden, so dass das Grundgestell 2 von dem Schwinger 5 und der Gegenmasse 6 schwingungsmäßig entkoppelt ist. Die vorangehende Beschreibung verdeutlich, dass der Schwinger 5 relativ zu der Gegenmasse 6 beweglich ist. Des weiteren bewirken die Biegefeder-Anordnungen 3 eine Halterung von Schwinger 5 und von Gegenmasse 6 an dem Grundgestell mit auch relativ dazu gegebener Beweglichkeit entgegen der Federkraft.

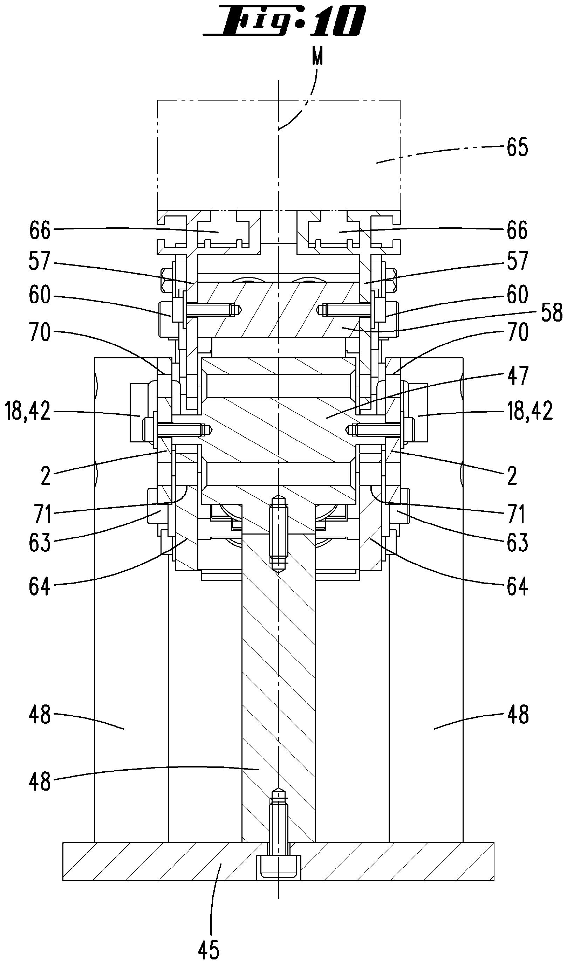

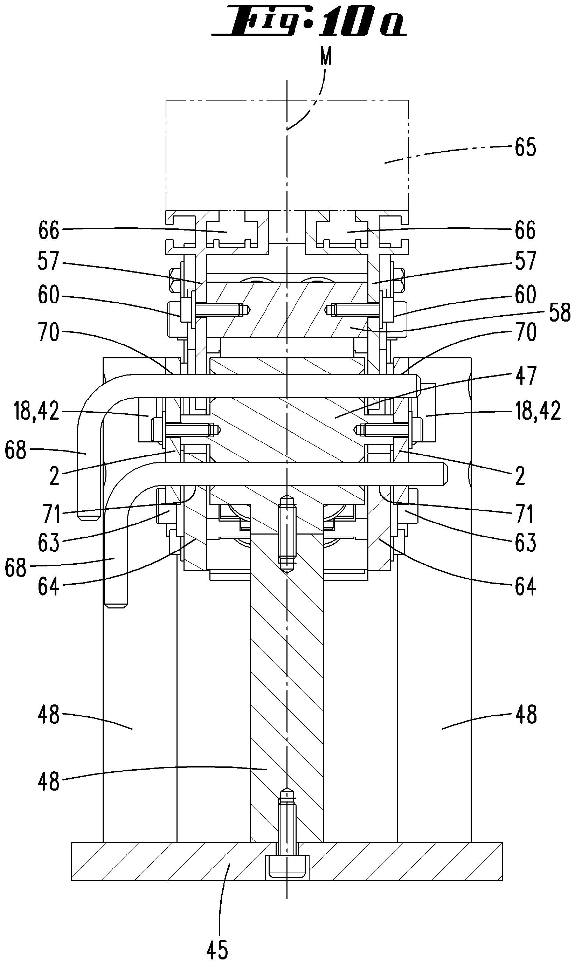

Bei dem gewählten Ausführungsbeispiel umfasst die Baugruppe des Schwingers 5 noch ein sich in Förderrichtung F erstreckendes Profil 65, das in den Figuren von einem gestrichelten Quader repräsentiert wird, um anzudeuten, dass das Profil 65 sehr unterschiedliche Formgebung (bspw. schienenartige Gestalt) aufweisen kann. Die Förderrichtung F erstreckt sich von der Eingabeseite 94, an welcher zu fördernde Kleinteile dem Linear-Vibrationsförderer 1 zugefördert werden, zu der Ausgabeseite 95. Das Profil 65 kann bspw. mittels nicht gezeigter Schrauben an Längsnuten 66 an der Oberseite der Schwingerlängsträger 57 angeschraubt werden. Das Profil 65 kann auch dazu dienen, um weitere Aufbauten zum Fördern von Fördergut (insbesondere von Kleinteilen, Granulat oder dergleichen) auf der Oberseite des Schwingers 5 zu montieren. Bei derartigen Aufbauten kann es sich bspw. um Förderschienen, Förderhindernisse (mit Sortiermerkmalen) oder dergleichen handeln. Des weiteren sind an dem Schwinger 5 und an der Gegenmasse 6 bei dem Ausführungsbeispiel jeweils Kontergewichte auswechselbar angeschraubt, die vereinfachend sämtlich mit 67 bezeichnet sind. Es handelt sich um mehrere scheibenartige Einzelgewichte, die zur Erzeugung eines gewünschten Gesamtgewichtes in gestapelter Anordnung an dem Schwinger 5 bzw. an der Gegenmasse 6 angeschraubt werden können. Bezüglich einer in Figur 10 dargestellten vertikalen, in Förderrichtung F orientierten Mittelebene M sind die Kontergewichte 67 bei dem Ausführungsbeispiel der Figuren 1 bis 15 mittensymmetrisch angebracht. Die Änderung von Ort und Anzahl der Kontergewichte 67 beeinflusst somit die Gewichte und die Lager der Schwerpunkte von Schwinger 5 und Gegenmasse 6 innerhalb der Mittelebene M. Bspw. kann es zweckmäßig sein, wenn die Lage dieser Schwerpunkte so gewählt wird, dass sich deren gedachte Verbindungslinie senkrecht zu den Federlängsrichtungen L der Biegefedern 27 erstreckt. Wie schon erläutert, wird mittels der Drehlager 18 erreicht, dass im Förderbetrieb die Biegefeder-Anordnungen 3 an ihrer mittigen Biegefeder 27 an dem Grundgestell 2 relativ zu diesem um die Drehachsen 4 verdrehbar gehalten sind. Der Federwinkel α ist dabei der Ruhelage bzw. Mittenlage der Biegefedern 27 zugeordnet. Um den Federwinkel α verstellen zu können, kann es vorteilhaft sein, diese Drehbarkeit vorübergehend zu unterbinden. Die Verstellung des Federwinkels α kann erfolgen, indem die Klemmschrauben 60, 63 zunächst gelockert werden, so dass diese entlang der bogensegmentförmigen Durchgangsnuten 59, 62 bewegt und anschließend erneut festgeschraubt werden können. Um während dieser Verstellung eine gewünschte, insbesondere symmetrische Einstellung zu vereinfachen, können bei dem gewählten Ausführungsbeispiel insgesamt vier Passstifte 68 in einer quasi neutralen bzw. mittigen Position der beiden Brückenlängsträger 49 relativ zu den Schwingerlängsträgern 57 und zu den Gegenmasselängsträgern 64 durch Passöffnungen hindurchgesteckt werden. Diese sind an den Brückenlängsträgern mit 69, an den Schwingerlängsträgern mit 70 und an den Gegenmasselängsträgern mit 71 bezeichnet. In der Schnittebene von Figur 10a handelt es sich dabei jeweils um zylindrische Bohrungen, während in der zweiten, in Blickrichtung von Figur 2 rechts neben dem Vibrationsantrieb 7 angeordneten Verstiftungsebene die Passöffnungen 70, 71 als Langlöcher gestaltet sind. Mit 72 wird in den Figuren ein elektrisches Versorgungskabel für den Vibrationsantrieb 7 bezeichnet.

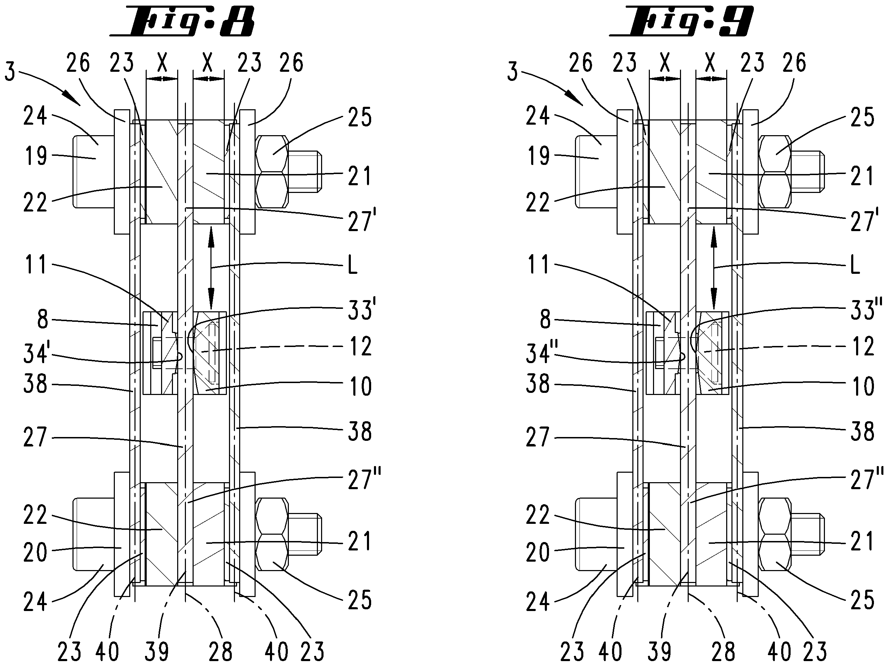

Mit Bezug auf die Figuren 8 und 9 werden zwei alternative Ausführungsbeispiele von Biegefeder-Anordnungen 3 vorgestellt, die sich jeweils dadurch von dem ersten bspw. in Figur 6 gezeigten Ausführungsbeispiel unterscheiden, dass keine ebenen Klemmflächen 33, 34 vorhanden sind. Stattdessen sind bei dem Ausführungsbeispiel von Figur 8 konvex gewölbte Oberflächen 33', 34' und bei dem Ausführungsbeispiel von Figur 9 Oberflächen 33", 34", die jeweils aus zwei gegenläufigen, nach außen weisenden und sich an einer Kante treffenden Teilflächen gebildet sind, vorgesehen. Bei beiden Ausführungen wird die Klemmkraft somit nur über schmale, insbesondere linienartige, Kontaktzonen übertragen, so dass anstelle der bspw. in Figur 6 realisierten beidseitigen Federeinspannung der mittigen Biegefeder 27 von einer vergleichsweise gelenkartigen Anbringung der Drehlager-Anschlusseinrichtung 8 an der Biegefeder 27 bzw. an den beiden Biegefederabschnitten 27', 27" zu sprechen ist.

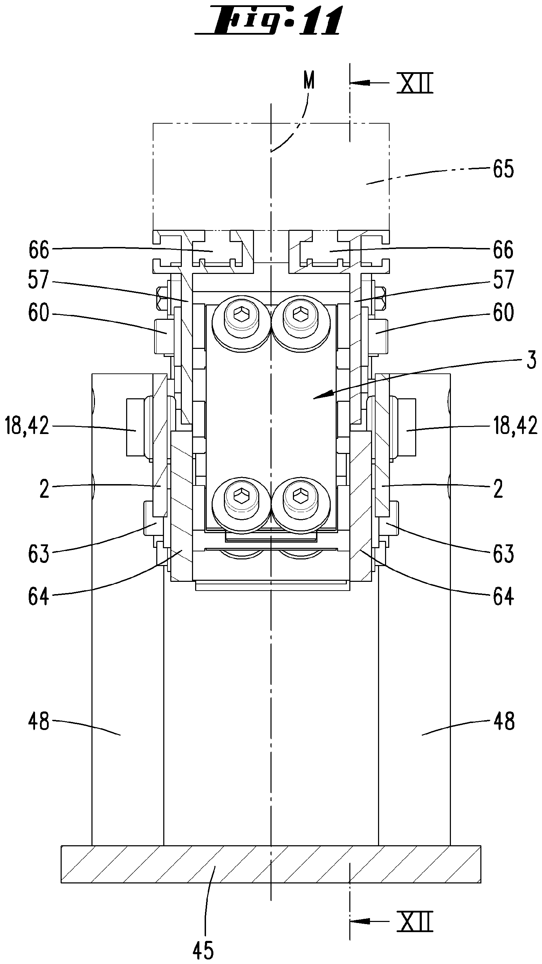

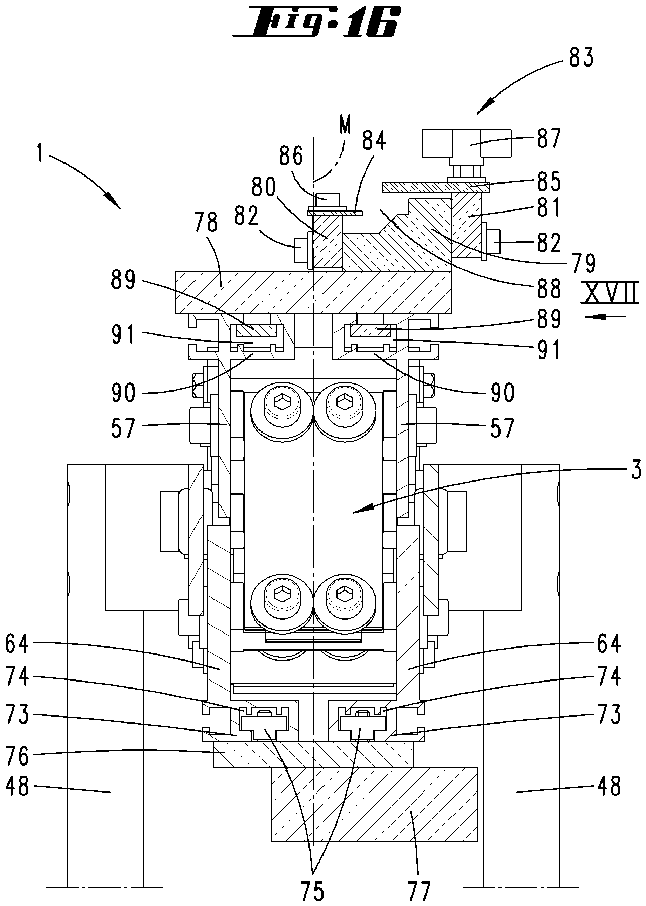

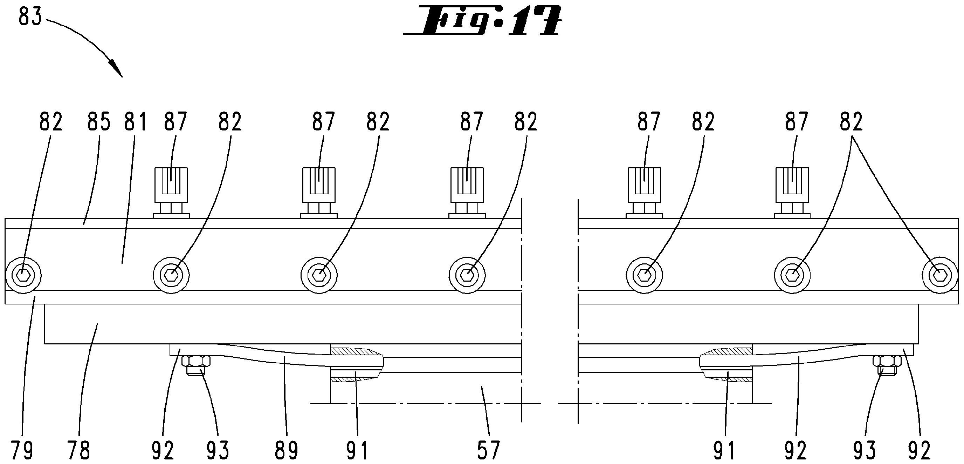

Mit Bezug auf die Figuren 16, 17 wird ein weiteres bevorzugtes Ausführungsbeispiel des erfindungsgemäßen Linear-Vibrationsförderers 1 vorgestellt. Der Schnittverlauf in Figur 16 entspricht dem von Figur 11. Dies zeigt, dass dort abweichend von dem ersten Ausführungsbeispiel an den beiden Gegenmasselängsträgern 64 unterseitig Profile 73 mit T-profilartigen Nuten 74 vorgesehen sind, in welche Klemmschrauben 75 zur Befestigung von zusätzlichen, jeweils plattenartigen Kontergewichten 76, 77 vorgesehen sind. Das Kontergewicht 76 ist seitensymmetrisch zu der Mittenebene M angeschraubt, während das Kontergewicht 77 daran außermittig angebracht wurde, um das Schwingungs- bzw. Förderverhalten im Hinblick auf die auch außermittig an den Schwingerlängsträgern oberseitig montierten Aufbauten auch quer bzw. in Seitenrichtung zu der Förderrichtung F zu beeinflussen. Diese Aufbauten bestehen bei dem Ausführungsbeispiel aus einer seitensymmetrisch montierten Grundplatte 78 und einem darauf in dem Querschnitt unsymmetrisch montierten Führungsprofil 79 mit sich daran seitlich anschließenden Führungsleisten 80, 81. Diese laufen entlang des Führungsprofils 79 und sind mittels Schrauben 82 verbunden. Die Aufbauten, welche insgesamt mit 83 bezeichnet sind, weisen zusätzlich zwei Abdeckleisten 84, 85 auf, die mit Schrauben 86, 87 gehalten sind, auf. Die Abdeckleisten 84, 85 überlappen sich nicht und beranden im Querschnitt gemeinsam mit dem Führungsprofil 79 und den beiden Führungsleisten 80, 81 einen Förderraum 88 für die zu fördernden Kleinteile, der sich in Förderrichtung F erstreckt.

Unterhalb der Grundplatte 78 sind zwei Leisten 89 zu ihrer Befestigung an den Schwingerlängsträgern 57 vorgesehen. An den Schwingerlängsträgern 57 sind dazu oberseitig Profilvorsprünge 90 mit nach oben offenen T-profilartigen Nuten 91 zur formschlüssigen Aufnahme der Leisten 89 ausgebildet. Wie aus Figur 17 zu erkennen ist, sind jeweils nur die freien Enden 92 der Leisten 89 mittels Schrauben 93 mit der Grundplatte 78 verbunden, wozu die Leisten 89 in dem angrenzenden Längenabschnitt geeignet abgebogen sind. Bei den Schrauben 93 kann es sich bspw. um Zylinderkopfschrauben handeln, die von oben in die Grundplatte 78 geschraubt werden und deren Kopf sich in je einer Senkung befindet. Durch das Anschrauben der freien Ende 92 an die Grundplatte 78 werden die Aufbauten 83 an den beiden Schwingerlängsträgern 57 fixiert, wobei zwischen den Leisten 89 und den T-profilartigen Nuten 91 eine Klemmung entsteht.

## Patentansprüche

1. Linear-Vibrationsförderer (1), aufweisend einen Schwinger (5), eine Gegenmasse (6) und ein Grundgestell (2), wobei der Schwinger (5) und die Gegenmasse (6) relativ zueinander beweglich und mittels zumindest eines Vibrationsantriebs (7) antreibbar sind, wobei der Linear-Vibrationsförderer (1) zumindest zwei voneinander beabstandet angeordnete Biegefeder-Anordnungen (3) umfasst, von denen jede zumindest eine Drehlager-Anschlusseinrichtung (8), die mit Drehlagermitteln (9), insbesondere lösbar, verbunden ist oder die Drehlagermittel (9) ausbildet, aufweist, wobei jeder Biegefeder-Anordnung (3) zumindest eine Schwinger-Anschlusseinrichtung (19) zur, insbesondere lösbaren, Befestigung an dem Schwinger (5) und zumindest eine Gegenmasse-Anschlusseinrichtung (20) zur, insbesondere lösbaren, Befestigung an der Gegenmasse (6) zugeordnet ist, und wobei die Drehlager-Anschlusseinrichtung (8), insbesondere mittig, zwischen der Schwinger-Anschlusseinrichtung (19) und der Gegenmasse-Anschlusseinrichtung (20), jeweils beabstandet von diesen, angeordnet ist, wobei jede Biegefeder-Anordnung (3) zumindest einen ersten Biegefederabschnitt (27'), der sich von der Drehlager-Anschlusseinrichtung (8) zu der Schwinger-Anschlusseinrichtung (19) erstreckt, oder zumindest eine erste Biegefeder, die sich von der Drehlager-Anschlusseinrichtung (8) zu der Schwinger-Anschlusseinrichtung (19) erstreckt, aufweist, und wobei jede Biegefeder-Anordnung (3) zumindest einen zweiten Biegefederabschnitt (27"), der sich von der Drehlager-Anschlusseinrichtung (8) zu der Gegenmasse-Anschlusseinrichtung (20) erstreckt, oder zumindest eine zweite Biegefeder, die sich von der Drehlager-Anschlusseinrichtung (8) zu der Gegenmasse-Anschlusseinrichtung (20) erstreckt, aufweist, **dadurch gekennzeichnet, dass** die Drehlagermittel (9) mit an dem Grundgestell (2) vorgesehenen, insbesondere daran angebrachten oder daran ausgebildeten, Drehlagergegenmitteln (17) zumindest ein Drehlager (18) bilden.

2. Linear-Vibrationsförderer (1) nach Anspruch 1, **dadurch gekennzeichnet, dass** sich der erste Biegefederabschnitt (27') und der zweite Biegefederabschnitt (27") oder dass sich die erste Biegefeder und die zweite Biegefeder, zumindest überwiegend, in oder entlang einer ihnen insofern gemeinsamen geometrischen Federbezugsebene erstrecken.

3. Linear-Vibrationsförderer (1) nach einem oder mehreren der vorangehenden Ansprüche, **dadurch gekennzeichnet, dass** der erste Biegefederabschnitt (27') und der zweite Biegefederabschnitt (27") beide integrale Bestandteile einer einstückigen Biegefeder (27) sind, die sich entlang, insbesondere mittensymmetrisch zu, einer geometrischen Mittelebene (28) der Biegefeder-Anordnung (3), durch die Drehlager-Anschlusseinrichtung (8) und/oder zwischen deren Komponenten hindurch erstreckt.

4. Linear-Vibrationsförderer (1) nach einem oder mehreren der vorangehenden Ansprüche, **dadurch gekennzeichnet, dass** zumindest in einem unbelasteten Zustand der Biegefeder-Anordnung (3) eine geometrische Mittelebene (28) der Biegefeder-Anordnung (3) durch die geometrische Drehachse (4) des Drehlagers (18) verläuft und insbesondere durch eine geometrische Mittellinie (30) verläuft, welche durch zwei Verbindungen der Schwinger-Anschlusseinrichtung (19) mit dem Schwinger (5) führt, und insbesondere durch eine geometrische Mittellinie (30) verläuft, welche durch zwei Verbindungen der Gegenmasse-Anschlusseinrichtung (20) mit der Gegenmasse (6) führt.

5. Linear-Vibrationsförderer (1) nach einem oder mehreren der vorangehenden Ansprüche, **dadurch gekennzeichnet, dass** der erste Biegefederabschnitt (27') und der zweite Biegefederabschnitt (27") in einer Federlängsrichtung (L) der Biegefeder (27), die sich quer zu der geometrischen Drehachse (4) des Drehlagers (18) erstreckt, einstückig aneinander angrenzen.

6. Linear-Vibrationsförderer (1) nach einem oder mehreren der vorangehenden Ansprüche, **dadurch gekennzeichnet, dass** der erste Biegefederabschnitt (27') oder die erste Biegefeder an der Drehlager-Anschlusseinrichtung (8) und an der Schwinger-Anschlusseinrichtung (19) jeweils lösbar zwischen je zwei Klemmbacken (10, 11, 21, 22) einer an der Drehlager-Anschlusseinrichtung (8) bzw. an der Schwinger-Anschlusseinrichtung (19) jeweils ausgebildeten Klemmeinrichtung eingespannt ist und dass der zweite Biegefederabschnitt (27") oder die zweite Biegefeder an der Drehlager-Anschlusseinrichtung (8) und an der Gegenmasse-Anschlusseinrichtung (20) lösbar zwischen je zwei Klemmbacken (10, 11, 21, 22) einer an der Drehlager-Anschlusseinrichtung (8) bzw. an der Gegenmasse-Anschlusseinrichtung (20) jeweils ausgebildeten Klemmeinrichtung eingespannt ist.

7. Linear-Vibrationsförderer (1) nach Anspruch 6, **dadurch gekennzeichnet, dass** die Klemmeinrichtung eine oder mehrere Klemmschrauben (12, 24) aufweist, mittels denen ihre beiden Klemmbacken (10,11,21,22) zusammengespannt werden können, wobei insbesondere vorgesehen ist, dass die Klemmschrauben (24) durch Durchgangsbohrungen (32) in der Biegefeder (27) hindurchgeführt sind.

8. Linear-Vibrationsförderer (1) nach einem oder beiden der Ansprüche 6, 7, **dadurch gekennzeichnet, dass** zwischen den beiden Klemmbacken (10,11) der Klemmeinrichtung der Drehlager-Anschlusseinrichtung (8) der erste und der zweite Biegefederabschnitt (27', 27") gemeinsam oder die erste und die zweite Biegefeder gemeinsam lösbar eingespannt sind.

9. Linear-Vibrationsförderer (1) nach einem oder mehreren der vorangehenden Ansprüche, **dadurch gekennzeichnet, dass** der erste Biegefederabschnitt (27') oder die erste Biegefeder mit der Drehlager-Anschlusseinrichtung (8) und/oder mit der Schwinger-Anschlusseinrichtung (19) jeweils einstückig ausgebildet oder damit jeweils unlösbar verbunden ist und dass der zweite Biegefederabschnitt (27") oder die zweite Biegefeder mit der Drehlager-Anschlusseinrichtung (8) und/oder mit der Gegenmasse-Anschlusseinrichtung (20) jeweils einstückig ausgebildet oder damit jeweils unlösbar verbunden ist.

10. Linear-Vibrationsförderer (1) nach einem oder mehreren der vorangehenden Ansprüche, **dadurch gekennzeichnet, dass** jede Biegefeder-Anordnung (3) eine oder mehrere Zusatz-Biegefedern (38) umfasst, von denen jede an ihrem einen Federlängsende zwischen zwei an der Schwinger-Anschlusseinrichtung (19) vorgesehenen Klemmteilen und an ihrem anderen Federlängsende zwischen zwei an der Gegenmasse-Anschlusseinrichtung (20) vorgesehenen Klemmteilen eingespannt ist.

11. Linear-Vibrationsförderer (1) nach Anspruch 10, **dadurch gekennzeichnet, dass** die Biegefeder (27) und die Zusatz-Biegefedern (38) je einen in Federlängsrichtung (L) gleichbleibenden Federquerschnitt aufweisen, wobei in Bezug auf jede Biegefeder (27) bzw. Zusatz-Biegefeder (38) ihre in Federlängsrichtung (L) gemessene Federlänge größer als eine in Federbreitenrichtung (B) parallel zu der geometrischen Drehachse (4) gemessene Federbreite und diese größer als eine quer zu der Federlängsrichtung (L) und quer zu der Federbreitenrichtung (B) in Federdickenrichtung (D) gemessene Federdicke ist, wobei insbesondere vorgesehen ist, dass die Federdicke in Federlängs- und in Federbreitenrichtung einheitlich ist.

12. Linear-Vibrationsförderer (1) nach einem oder mehreren der vorangehenden Ansprüche, **dadurch gekennzeichnet, dass** es sich bei der Biegefeder (27) und insbesondere bei den Zusatz-Biegefedern (38) um, insbesondere in sich ebene, Federn aus Flachmaterial, insbesondere um in sich ebene Blattfedern, handelt.

13. Linear-Vibrationsförderer (1) nach einem oder mehreren der vorangehenden Ansprüche 10 bis 12, **dadurch gekennzeichnet, dass** sich zumindest in einem unbelasteten Zustand der Biegefeder-Anordnung (3) die von der Federlängsrichtung (L) und der Federbreitenrichtung (B) der Biegefeder (27) aufgespannte Biegefeder-Ebene (39) flächenparallel zu und dazu in Querrichtung beabstandet von den Zusatzbiegefeder-Ebenen (40) erstreckt, die jeweils von der Federlängsrichtung (L) und der Federbreitenrichtung (B) der Zusatz-Biegefedern (38) aufgespannt werden.

14. Linear-Vibrationsförderer (1) nach einem oder mehreren der vorangehenden Ansprüche, **dadurch gekennzeichnet, dass** die Biegefeder (27), die sich mittig durch die Drehlager-Anschlusseinrichtung (8) hindurch erstreckt, und/oder die Zusatzbiegefedern (38) aus Metall oder aus Kunststoff, insbesondere aus faserarmiertem Kunststoff, dessen Fasern sich in oder im Wesentlichen in Federlängsrichtung erstrecken, hergestellt ist.

15. Linear-Vibrationsförderer (1) nach einem oder mehreren der vorangehenden Ansprüche, **dadurch gekennzeichnet, dass** das Gesamtgewicht des Schwingers (5) dem Gesamtgewicht der Gegenmasse (6) entspricht oder im Wesentlichen entspricht.

16. Linear-Vibrationsförderer (1) nach einem oder mehreren der vorangehenden Ansprüche, **dadurch gekennzeichnet, dass** der Federwinkel, der zwischen der Federlängsrichtung (L) der Biegefeder (27) und einer quer zu der Förderrichtung (F) orientierten Bezugsebene aufgespannt wird, veränderbar einstellbar ist.

17. Linear-Vibrationsförderer (1) nach einem oder mehreren der vorangehenden Ansprüche, **dadurch gekennzeichnet, dass** an dem Grundgestell (2) zumindest zwei voneinander beabstandete Lagerorte (42) vorgesehen sind, wobei an jedem Lagerort (42) als Drehlagergegenmittel (17) ein Paar zueinander fluchtende Lagerbohrungen (43) ausgebildet ist, mittels denen die Drehlager-Anschlusseinrichtung (8) drehbar gehalten ist, wobei insbesondere vorgesehen ist, dass die Drehlager-Anschlusseinrichtung (8) an ihren beiden Längsenden als Drehlagermittel (9) je einen lösbaren oder einstückig angeformten Gelenkzapfen (50) aufweist, der drehbar in je eine Lagerbohrung (43) eingreift.

18. Linear-Vibrationsförderer (1) nach einem oder mehreren der vorangehenden Ansprüche, **dadurch gekennzeichnet, dass** das Grundgestell (2) eine Basis (45), bei der es sich insbesondere um eine Grundplatte wie bspw. um eine Bodenplatte handelt, und eine Grundgestellbrücke (46) umfasst, wobei die Grundgestellbrücke (46) zwei voneinander beabstandete, insbesondere parallel zueinander verlaufende, Brückenlängsträger (49) aufweist, die mittels einer Mehrzahl von Brückenstützen (48) von der Basis (45) beabstandet gehalten sind, und dass sich von den paarweise fluchtenden Drehlagergegenmitteln (17) je eines in je einem der Brückenlängsträger (49) befindet.

19. Linear-Vibrationsförderer (1) nach einem oder mehreren der vorangehenden Ansprüche, **dadurch gekennzeichnet, dass** der Vibrationsantrieb (7) zumindest einen elektromagnetischen Magnetantrieb (7') umfasst, der zumindest einen Elektromagneten (51) und zumindest einen Anker (52) aufweist, wobei der Elektromagnet (51) an der Gegenmasse (6) und der Anker (52) an dem Schwinger (5) oder alternativ der Elektromagnet (51) an dem Schwinger (5) und der Anker (52) an der Gegenmasse (6) befestigt ist, so dass sich zumindest in einem unerregten Ruhezustand des Elektromagneten (51) zwischen dem Elektromagnet (51) und dem Anker (52) ein Magnetspalt (53) befindet.

20. Linear-Vibrationsförderer (1) nach einem oder mehreren der vorangehenden Ansprüche, **dadurch gekennzeichnet, dass** zwecks individueller Veränderbarkeit der Neigungsstellung der Biegefeder-Anordnungen (3) relativ zu einer zu der Förderrichtung (F) senkrechten Bezugsebene (41) Befestigungsmittel (55, 56) vorgesehen sind, mittels denen sich der Befestigungsort der Biegefeder-Anordnung (3) an dem Schwinger (5), insbesondere stufenlos und insbesondere entlang einer Bogensegmentkurve, wählen lässt und mittels denen sich der Befestigungsort der Biegefeder-Anordnung (3) an der Gegenmasse (6), insbesondere stufenlos und insbesondere entlang einer weiteren Bogensegmentkurve, wählen lässt, wobei insbesondere vorgesehen ist, dass die Weite des Magnetspalts (53) in einem unerregten Ruhezustand geometrisch unabhängig von der Wahl der Befestigungsorte ist.

21. Linear-Vibrationsförderer (1) nach einem oder mehreren der vorangehenden Ansprüche, **dadurch gekennzeichnet, dass** der Schwinger (5) zwei voneinander beabstandete, insbesondere zueinander parallel verlaufende, Schwingerlängsträger (57) aufweist, zwischen denen die jeweilige Schwinger-Anschlusseinrichtung (19) der Biegefeder-Anordnungen angeordnet ist, und in denen paarweise zueinander fluchtende, bogensegmentförmige Durchgangsnuten (59) ausgebildet sind, wobei je eine lösbare Klemmschraube (60) von außen durch je eine Durchgangsnut (59) in je eine stirnseitige Gewindebohrung (29) in der Schwinger-Anschlusseinrichtung (19) eingeschraubt ist.

22. Linear-Vibrationsförderer (1) nach einem oder mehreren der vorangehenden Ansprüche, **dadurch gekennzeichnet, dass** die Gegenmasse (6) zwei, insbesondere parallel, voneinander beabstandete Gegenmasselängsträger (64) aufweist, zwischen denen die jeweilige Gegenmasse-Anschlusseinrichtung (20) der Biegefeder-Anordnungen (3) angeordnet ist und in denen paarweise zueinander fluchtende, bogensegmentförmige Durchgangsnuten (62) ausgebildet sind, wobei je eine lösbare Klemmschraube (63) von außen durch je eine Durchgangsnut (62) in je eine stirnseitige Gewindebohrung (29) in der Gegenmasse-Anschlusseinrichtung (20) eingeschraubt ist.

23. Linear-Vibrationsförderer (1) nach den Ansprüchen 21, 22, **dadurch gekennzeichnet, dass** an jeder Biegefeder-Anordnung (3) die Mittellinien (30) der Gewindebohrungen (29) der Schwinger-Anschlusseinrichtung (19) und die Mittellinien (30) der Gewindebohrungen (29) der Gegenmasse-Anschlusseinrichtung (20) und die geometrische Drehachse (4) des zugeordneten Drehlagers (18) in einer gemeinsamen geometrischen Ebene liegen.

24. Linear-Vibrationsförderer nach einem oder mehreren der vorangehenden Ansprüche, **dadurch gekennzeichnet, dass** an dem Schwinger und an der Gegenmasse Kontergewichte (67) in veränderbarer Gewichtmasse und/oder in veränderbarer Lage anbringbar sind.

## Claims

1. Linear vibratory conveyor (1) comprising an oscillator (5), a counterweight (6) and a main frame (2), the oscillator (5) and the counterweight (6) being movable relative to one another and being drivable by means of at least one vibration drive (7), the linear vibratory conveyor (1) comprising at least two bending spring arrangements (3) that are arranged so as to be spaced apart from one another and each of which comprises at least one pivot bearing connection device (8) which is connected, in particular releasably, to pivot bearing means (9) or forms the pivot bearing means (9), each bending spring arrangement (3) being assigned at least one oscillator connection device (19) for attachment, in particular releasable attachment, to the oscillator (5) and at least one counterweight connection device (20) for attachment, in particular releasable attachment, to the counterweight (6), and the pivot bearing connection device (8) being arranged, in particular centrally, between the oscillator connection device (19) and the counterweight connection device (20) and so as to be spaced apart from each, each bending spring arrangement (3) comprising at least one first bending spring portion (27') which extends from the pivot bearing connection device (8) to the oscillator connection device (19), or at least one first bending spring which extends from the pivot bearing connection device (8) to the oscillator connection device (19), and each bending spring arrangement (3) comprising at least one second bending spring portion (27") which extends from the pivot bearing connection device (8) to the counterweight connection device (20), or at least one second bending spring which extends from the pivot bearing connection device (8) to the counterweight connection device (20), **characterised in that** the pivot bearing means (9) form at least one pivot bearing (18) together with pivot bearing mating means (17) provided on, in particular attached to or formed on, the main frame (2).

2. Linear vibratory conveyor (1) according to claim 1, **characterised in that** the first bending spring portion (27') and the second bending spring portion (27") or the first bending spring and the second bending spring extend, at least predominantly, in or along a geometrical spring reference plane that is common to them both in this respect.

3. Linear vibratory conveyor (1) according to one or more of the preceding claims, **characterised in that** the first bending spring portion (27') and the second bending spring portion (27") are both integral component parts of a single-piece bending spring (27) that extends through the pivot bearing connection device (8) and/or between the components thereof along, in particular centrosymmetrically to, a geometrical centre plane (28) of the bending spring arrangement (3).

4. Linear vibratory conveyor (1) according to one or more of the preceding claims, **characterised in that**, at least when the bending spring arrangement (3) is in an unloaded state, a geometrical centre plane (28) of the bending spring arrangement (3) extends through the geometrical axis of rotation (4) of the pivot bearing (18) and in particular extends through a geometrical centre line (30) that passes through two points where the oscillator connection device (19) connects to the oscillator (5), and in particular extends through a geometrical centre line (30) that passes through two points where the counterweight connection device (20) connects to the counterweight (6).

5. Linear vibratory conveyor (1) according to one or more of the preceding claims, **characterised in that** the first bending spring portion (27') and the second bending spring portion (27") are integrally adjacent in a spring longitudinal direction (L) of the bending spring (27) that extends transversely to the geometrical axis of rotation (4) of the pivot bearing (18).

6. Linear vibratory conveyor (1) according to one or more of the preceding claims, **characterised in that** the first bending spring portion (27') or the first bending spring are each releasably clamped to the pivot bearing connection device (8) and to the oscillator connection device (19), in each case between two clamping jaws (10, 11, 21, 22) of a clamping device formed on the pivot bearing connection device (8) and on the oscillator connection device (19), respectively, and **in that** the second bending spring portion (27") or the second bending spring is releasably clamped to the pivot bearing connection device (8) and to the counterweight connection device (20), in each case between two clamping jaws (10, 11, 21, 22) of a clamping device formed on the pivot bearing connection device (8) and on the counterweight connection device (20), respectively.

7. Linear vibratory conveyor (1) according to claim 6, **characterised in that** the clamping device comprises one or more clamping screws (12, 24), by means of which the two clamping jaws (10, 11, 21, 22) of said device can be tightened, it being provided in particular for the clamping screws (24) to be passed through through-holes (32) in the bending spring (27).

8. Linear vibratory conveyor (1) according to one or both of claims 6 and 7, **characterised in that** both the first bending spring portion (27') and the second bending spring portion (27") or both the first and the second bending spring are releasably clamped, together, between the two clamping jaws (10, 11) of the clamping device of the pivot bearing connection device (8).

9. Linear vibratory conveyor (1) according to one or more of the preceding claims, **characterised in that** the first bending spring portion (27') or the first bending spring is formed integrally with the pivot bearing connection device (8) and/or with the oscillator connection device (19) in each case, or is connected to said pivot bearing connection device and/or said oscillator connection device (19) in a non-releasable manner in each case, and **in that** the second bending spring portion (27") or the second bending spring is formed integrally with the pivot bearing connection device (8) and/or with the counterweight connection device (20) in each case or is connected to said pivot bearing connection device and/or to said counterweight connection device in a non-releasable manner in each case.

10. Linear vibratory conveyor (1) according to one or more of the preceding claims, **characterised in that** each bending spring arrangement (3) comprises one or more additional bending springs (38), each of which is clamped, at one of its spring longitudinal ends, between two clamping parts provided on the oscillator connection device (19) and, at its other spring longitudinal end, between two clamping parts provided on the counterweight connection device (20).

11. Linear vibratory conveyor (1) according to claim 10, **characterised in that** the bending spring (27) and the additional bending springs (38) each have a spring cross section which is constant in the spring longitudinal direction (L), the spring length of each bending spring (27) or additional bending spring (38) measured in the spring longitudinal direction (L) being greater than a spring width that is measured in the spring width direction (B), in parallel with the geometrical axis of rotation (4), and that is greater than a spring thickness that is measured in the spring thickness direction (D), transversely to the spring longitudinal direction (L) and transversely to the spring width direction (B), it being provided in particular for the spring thickness to be uniform in the spring longitudinal direction and in the spring width direction.

12. Linear vibratory conveyor (1) according to one or more of the preceding claims, **characterised in that** the bending spring (27), and in particular the additional bending springs (38), is/are intrinsically flat springs made of flat material, in particular intrinsically flat leaf springs.

13. Linear vibratory conveyor (1) according to one or more of preceding claims 10 to 12, **characterised in that**, at least when the bending spring arrangement (3) is in an unloaded state, the bending spring plane (39) spanned by the spring longitudinal direction (L) and the spring width direction (B) of the bending spring (27) extends so as to have surfaces parallel with the additional bending spring planes (40) and so as to be spaced apart therefrom in the transverse direction, each plane of which additional bending spring planes are spanned by the spring longitudinal direction (L) and the spring width direction (B) of the additional bending springs (38).

14. Linear vibratory conveyor (1) according to one or more of the preceding claims, **characterised in that** the bending spring (27), which extends through the centre of the pivot bearing connection device (8), and/or the additional bending springs (38), are made of metal or plastics material, in particular fibre-reinforced plastics material, the fibres of which extend in or substantially in the spring longitudinal direction.

15. Linear vibratory conveyor (1) according to one or more of the preceding claims, **characterised in that** the overall weight of the oscillator (5) corresponds or substantially corresponds to the overall weight of the counterweight (6).

16. Linear vibratory conveyor (1) according to one or more of the preceding claims, **characterised in that** the spring angle that is spanned between the spring longitudinal direction (L) of the bending spring (27) and a reference plane oriented transversely to the conveying direction (F) is variably adjustable.

17. Linear vibratory conveyor (1) according to one or more of the preceding claims, **characterised in that** at least two bearing points (42) are provided at a spacing from one another on the main frame (2), a pair of aligned bearing holes (43) being made at each bearing point (42) as pivot bearing mating means (17), by means of which holes the pivot bearing connection device (8) is rotatably held, it being provided in particular for the pivot bearing connection device (8) to comprise, at both of its longitudinal ends, a releasable or integrally moulded pivot pin (50) as a pivot bearing means (9) which each engage rotatably in one pivot bearing hole (43).

18. Linear vibratory conveyor (1) according to one or more of the preceding claims, **characterised in that** the main frame (2) comprises a base (45), which is in particular a base plate such as a floor plate, and a main frame bridge (46), the main frame bridge (46) comprising two longitudinal bridge beams (49) that are spaced apart from one another, extend in particular in parallel with one another and are held by a plurality of bridge supports (48) so as to be spaced apart from the base (45), and **in that** one of the pivot bearing mating means (17) that are aligned in pairs is located in one of the longitudinal bridge beams (49) in each case.

19. Linear vibratory conveyor (1) according to one or more of the preceding claims, **characterised in that** the vibration drive (7) comprises at least one electromagnetic solenoid actuator (7') which comprises at least one electromagnet (51) and at least one anchor (52), the electromagnet (51) being attached to the counterweight (6) and the anchor (52) being attached to the oscillator (5), or, alternatively, the electromagnet (51) being attached to the oscillator (5) and the anchor (52) being attached to the counterweight (6), so that, at least in a non-excited idle state of the electromagnet (51), a magnetic gap (53) is formed between the electromagnet (51) and the anchor (52).

20. Linear vibratory conveyor (1) according to one or more of the preceding claims, **characterised in that**, in order to be able to individually change the inclination of the bending spring arrangements (3) relative to a reference plane (41) that is perpendicular to the conveying direction (F), attachment means (55, 56) are provided, by means of which the point where the bending spring arrangement (3) is attached to the oscillator (5) can be selected, in particular steplessly and in particular along an arc segment curve, and by means of which the point where the bending spring arrangement (3) is attached to the counterweight (6) can be selected, in particular steplessly and in particular along an additional arc segment curve, it being provided in particular for the size of the magnetic gap (53) to be geometrically independent of the selection of the attachment points in a non-excited idle state.

21. Linear vibratory conveyor (1) according to one or more of the preceding claims, **characterised in that** the oscillator (5) comprises two longitudinal oscillator beams (57) that are mutually spaced, extend in particular in parallel with one another and between which the relevant oscillator connection device (19) of the bending spring arrangements is arranged, and in which arc segment-shaped passage grooves (59), aligned in pairs, are formed, in each case one releasable clamping screw (60) being screwed, from the outside, through one passage groove (59) and into one threaded hole (29) in each case in the end face of the oscillator connection device (19).

22. Linear vibratory conveyor (1) according to one or more of the preceding claims, **characterised in that** the counterweight (6) comprises two, in particular parallel, mutually spaced longitudinal counterweight beams (64), between which the relevant counterweight connection device (20) of the bending spring arrangements (3) is arranged, and in which arc segment-shaped passage grooves (62), aligned in pairs, are formed, in each case one releasable clamping screw (63) being screwed, from the outside, though one passage groove (62) and into one threaded hole (29) in each case in the end face of the counterweight connection device (20).

23. Linear vibratory conveyor (1) according to claims 21 and 22, **characterised in that**, on each bending spring arrangement (3), the centre lines (30) of the threaded holes (29) in the oscillator connection device (19) and the centre lines (30) of the threaded holes (29) in the counterweight connection device (20) and the geometrical axis of rotation (4) of the associated pivot bearing (18) lie in a common geometrical plane.

24. Linear vibratory conveyor according to one or more of the preceding claims, **characterised in that** balancing weights (67) can be attached to the oscillator and to the counterweight such that the weight and/or position of said balancing weights can be changed.

## Revendications

1. Transporteur linéaire à vibrations (1), comprenant un vibreur (5), un contrepoids (6) et un châssis de base (2), dans lequel le vibreur (5) et le contrepoids (6) sont mobiles l'un par rapport à l'autre et susceptibles d'être actionnés par au moins un générateur de vibrations (7), dans lequel le transporteur linéaire à vibrations (1) comprend au moins deux agencements de ressort de flexion (3) espacés l'un de l'autre dont chacun comprend un dispositif de raccordement de palier rotatif (8) qui est lié, en particulier de manière amovible, avec des moyens de palier rotatif (9) ou qui forme les moyens de palier rotatif (9), dans lequel il est associé à chaque agencement de ressort de flexion (3) au moins un dispositif de raccordement de vibreur (19) pour le raccordement, en particulier amovible, au vibreur (5) et au moins un dispositif de raccordement de contrepoids (6) pour le raccordement, en particulier amovible, au contrepoids (6), et dans lequel le dispositif de raccordement de palier rotatif (8) est agencé, en particulier de manière centrale, entre le dispositif de raccordement de vibreur (19) et le dispositif de raccordement de contrepoids (20) en étant espacé de ceux-ci, dans lequel chaque agencement de ressort de flexion (3) présente au moins une première section de ressort de flexion (27') qui s'étend du dispositif de raccordement de palier rotatif (8) au dispositif de raccordement de vibreur (19) ou au moins un premier ressort de flexion qui s'étend du dispositif de raccordement de palier rotatif (8) au dispositif de raccordement de vibreur (19), et dans lequel chaque agencement de ressort de flexion (3) présente au moins une deuxième section de ressort de flexion (27") qui s'étend du dispositif de raccordement de palier rotatif (8) au dispositif de raccordement de contrepoids (20) ou au moins un deuxième ressort de flexion qui s'étend du dispositif de raccordement de palier rotatif (8) au dispositif de raccordement de contrepoids (20), **caractérisé en ce que** les moyens de palier rotatif (9) forment avec des contre-moyens de palier rotatif (17) au moins un palier rotatif (18), les contre-moyens de palier rotatif (17) étant prévus sur le châssis de base (2), en particulier y sont montés ou formés sur lui.

2. Transporteur linéaire à vibrations (1) selon la revendication 1, **caractérisé en ce que** la première section de ressort de flexion (27') et la deuxième section de ressort de flexion (27") ou le premier ressort de flexion et le deuxième ressort de flexion s'étendent au moins majoritairement dans ou le long d'un plan géométrique commun de référence de ressort.

3. Transporteur linéaire à vibrations (1) selon une ou plusieurs des revendications précédentes, **caractérisé en ce que** la première section de ressort de flexion (27') et la deuxième section de ressort de flexion (27") sont les deux éléments constitutifs intégraux d'un ressort de flexion réalisé d'un seul tenant lequel s'étend le long, en particulier en symétrie centrale, d'un plan géométrique médian (28) de l'agencement de ressort de flexion (3) en passant par le dispositif de raccordement de palier rotatif (8) et/ou entre les pièces constitutives de celui-ci.

4. Transporteur linéaire à vibrations (1) selon une ou plusieurs des revendications précédentes, **caractérisé en ce que**, au moins dans un état non chargé de l'agencement de ressort de flexion (3), un plan géométrique médian (28) de l'agencement de ressort de flexion (3) passe par l'axe de rotation géométrique (4) du palier rotatif (18) et passe en particulier par une ligne géométrique centrale (30) qui traverse deux liaisons du dispositif de raccordement de vibreur (19) avec le vibreur (5) et passe en particulier par une ligne géométrique centrale (30) qui traverse deux liaisons du dispositif de raccordement de contrepoids (20) avec le contrepoids (6).

5. Transporteur linéaire à vibrations (1) selon une ou plusieurs des revendications précédentes, **caractérisé en ce que** la première section de ressort de flexion (27') et la deuxième section de ressort de flexion (27") viennent se jouxter d'un seul tenant dans une direction longitudinale (L) du ressort (27) laquelle s'étend transversalement à l'axe de rotation géométrique (4) du palier rotatif (18).

6. Transporteur linéaire à vibrations (1) selon une ou plusieurs des revendications précédentes, **caractérisé en ce que** la première section de ressort de flexion (27') ou le premier ressort de flexion est monté au dispositif de raccordement de palier rotatif (8) et au dispositif de raccordement de vibreur (19) respectivement de manière amovible entre respectivement deux mâchoires de serrage (10, 11, 21, 22) d'un dispositif de serrage respectif formé respectivement sur le dispositif de raccordement de palier rotatif (8) et sur le dispositif de raccordement de vibreur (19) et que la deuxième section de ressort de flexion (27") ou le deuxième ressort de flexion est monté au dispositif de raccordement de palier rotatif (8) et au dispositif de raccordement de contrepoids (20) de manière amovible entre respectivement deux mâchoires de serrage (10, 11, 21, 22) d'un dispositif de serrage respectif formé respectivement sur le dispositif de raccordement de palier rotatif (8) et sur le dispositif de raccordement de contrepoids (20).

7. Transporteur linéaire à vibrations (1) selon la revendication 6, **caractérisé en ce que** le dispositif de serrage comprend une ou plusieurs vis de serrage (12, 24) au moyen desquels ses deux mâchoires de serrage (10, 11, 21, 22) sont susceptibles d'être serrées ensemble, dans lequel il est prévu en particulier que les vis de serrage (24) traversent des trous traversants (32) ménagés dans le ressort de flexion (27).

8. Transporteur linéaire à vibrations (1) selon l'une des revendications 6 et 7 ou les deux, **caractérisé en ce que** les première et deuxième sections de ressort de flexion (27', 27") ou les premier et deuxième ressorts de flexion sont serrés ensemble de manière amovible entre les deux mâchoires de serrage (10, 11) du dispositif de serrage du dispositif de raccordement de palier rotatif (8).

9. Transporteur linéaire à vibrations (1) selon une ou plusieurs des revendications précédentes, **caractérisé en ce que** la première section de ressort de flexion (27') ou le premier ressort de flexion est formé d'un seul tenant avec le dispositif de raccordement de palier rotatif (8) et/ou avec le dispositif de raccordement de vibreur (19) respectivement ou leur est respectivement lié de manière inamovible et que la deuxième section de ressort de flexion (27") ou le deuxième ressort de flexion est formé d'un seul tenant avec le dispositif de raccordement de palier rotatif (8) et/ou avec le dispositif de raccordement de contrepoids (20) respectivement ou leur est respectivement lié de manière inamovible.

10. Transporteur linéaire à vibrations (1) selon une ou plusieurs des revendications précédentes, **caractérisé en ce que** chaque agencement de ressort de flexion (3) comprend un ou plusieurs ressorts de flexion supplémentaires (38) chacun desquels est enserré à l'une de ses extrémités longitudinales de ressort entre deux éléments de serrages prévus sur le dispositif de raccordement de vibreur (19) et à l'autre de ses extrémités longitudinales de ressort entre deux éléments de serrages prévus sur le dispositif de raccordement de contrepoids (20).

11. Transporteur linéaire à vibrations (1) selon la revendication 10, **caractérisé en ce que** le ressort de flexion (27) et les ressorts de flexion supplémentaires (38) présentent chacun une section restant constante dans la direction longitudinale de ressort (L), dans lequel, en référence à chacun des ressorts de flexion (27), respectivement des ressorts de flexion supplémentaires (38), leur longueur mesurée suivant la direction longitudinale de ressort (L) est supérieure à une largeur de ressort mesurée suivant une direction selon la largeur du ressort (B) qui est parallèle à l'axe de rotation géométrique (4) et celle-ci est supérieure à une épaisseur de ressort mesurée transversalement à la direction longitudinale de ressort (L) et transversalement à la direction selon la largeur du ressort (B), dans lequel il est prévu en particulier que l'épaisseur de ressort dans la direction longitudinale de ressort et dans la direction selon la largeur du ressort est homogène.

12. Transporteur linéaire à vibrations (1) selon une ou plusieurs des revendications précédentes, **caractérisé en ce que** concernant le ressort de flexion (27) et en particulier concernant les ressorts de flexion supplémentaires (38), il s'agit de ressorts qui, en particulier, sont plats en soi et réalisés en matériau plat, en particulier des ressorts à lames qui sont plats en soi.

13. Transporteur linéaire à vibrations (1) selon une ou plusieurs des revendications précédentes 10 à 12, **caractérisé en ce que**, au moins dans un état non chargé de l'agencement de ressort de flexion (3), le plan de ressort de flexion (39) défini par la direction longitudinale de ressort (L) et la direction selon la largeur du ressort (B) du ressort de flexion (27) s'étend, en étant espacés de ceux-ci suivant la direction transversale, parallèlement à la surface des plans des ressorts de flexion supplémentaires (40) qui sont définis respectivement par la direction longitudinale de ressort (L) et la direction selon la largeur du ressort (B) des ressorts de flexion supplémentaires (38).

14. Transporteur linéaire à vibrations (1) selon une ou plusieurs des revendications précédentes, **caractérisé en ce que** le ressort de flexion (27) qui passe centralement par le dispositif de raccordement de palier rotatif (8) et/ou les ressorts de flexion supplémentaires (38) sont réalisés en métal ou en matière plastique, en particulier en matière plastique renforcée par des fibres et dont les fibres s'étendent suivant la direction longitudinale du ressort ou sensiblement suivant cette direction.

15. Transporteur linéaire à vibrations (1) selon une ou plusieurs des revendications précédentes, **caractérisé en ce que** le poids total du vibreur (5) correspond au poids total du contrepoids (6) ou y correspond sensiblement.

16. Transporteur linéaire à vibrations (1) selon une ou plusieurs des revendications précédentes, **caractérisé en ce que** l'angle de ressort, lequel est formé entre la direction longitudinale (L) du ressort de flexion (27) et un plan de référence orienté transversalement par rapport à la direction de transport (F), est réglable.

17. Transporteur linéaire à vibrations (1) selon une ou plusieurs des revendications précédentes, **caractérisé en ce qu'**au moins deux emplacements de palier (42) distants l'un de l'autre sont prévus sur le châssis de base (2), dans lequel à chaque emplacement de palier (42) sont formés en tant que contre-moyens de palier rotatif (17) une paire d'alésages de palier (43) qui sont alignés et au moyen desquels le dispositif de raccordement de palier rotatif (8) est monté à rotation, dans lequel il est prévu en particulier que le dispositif de raccordement de palier rotatif (8) présente à ses deux extrémités longitudinales un pivot d'articulation (50) respectif, amovible ou formé d'un seul tenant, en tant que moyen de palier rotatif (9) et qui est monté à rotation dans un alésage de palier (43) respectif.

18. Transporteur linéaire à vibrations (1) selon une ou plusieurs des revendications précédentes, **caractérisé en ce que** le châssis de base (2) comprend une base (45), consistant en particulier en une plaque de base tel que par exemple une plaque inférieure, et un pont de châssis de base (46), dans lequel le pont de châssis de base (46) comprend deux longerons de pont (49) espacés l'un de l'autre, en particulier s'étendant parallèlement entre eux, lesquels sont maintenus espacés de la base (45) au moyen d'une pluralité de piliers de pont (48), et **en ce que** chacun des contre-moyens de palier rotatif (17) alignés par paire est placé dans l'un respectif des longerons de pont (49).

19. Transporteur linéaire à vibrations (1) selon une ou plusieurs des revendications précédentes, **caractérisé en ce que** le générateur de vibrations (7) comprend au moins un entrainement électromagnétique (7') lequel comprend au moins un électro-aimant (51) et au moins un induit (52), dans lequel l'électroaimant (51) est fixé au contrepoids (6) et l'induit (52) au vibreur (5) ou alternativement l'électroaimant (51) au vibreur (5) et l'induit (52) au contrepoids (6), de manière à ce qu'il y ait un entrefer entre l'électroaimant (51) et l'induit (52) dans un état de repos non excité de l'électroaimant (51).

20. Transporteur linéaire à vibrations (1) selon une ou plusieurs des revendications précédentes, **caractérisé en ce que** sont prévus, pour permettre la modification individuelle de l'inclinaison des agencements de ressort de flexion (3) par rapport à un plan de référence (41) perpendiculaire à la direction de transport (F), des moyens de fixation (55, 56) au moyen desquels la position de fixation de l'agencement de ressort de flexion (3) sur le vibreur (5) est susceptible d'être sélectionnée en particulier de manière continue et en particulier le long d'une courbe en arc de cercle et au moyen desquels la position de fixation de l'agencement de ressort de flexion (3) sur le contrepoids (6) est susceptible d'être sélectionnée en particulier de manière continue et en particulier le long d'une autre courbe en arc de cercle, dans lequel il est prévu en particulier que la largeur de l'entrefer (53) dans un état de repos non excité soit géométriquement indépendant du choix des positions de fixation.

21. Transporteur linéaire à vibrations (1) selon une ou plusieurs des revendications précédentes, **caractérisé en ce que** le vibreur (5) présente deux longerons de vibreur (57) espacés l'un de l'autre et s'étendant en particulier parallèlement entre eux, et entre lesquels est agencé le dispositif de raccordement de vibreur (19) respectif des agencements de ressort de flexion, et dans lesquels sont ménagées des rainures de passage (59) en forme d'arcs de cercle et alignées par paire, dans lequel à chaque fois une vis de serrage amovible (60) est vissée depuis l'extérieur à travers à chaque fois une rainure de passage (59) dans à chaque fois un taraudage (29) ménagé dans le côté frontal du dispositif de raccordement de vibreur (19).

22. Transporteur linéaire à vibrations (1) selon une ou plusieurs des revendications précédentes, **caractérisé en ce que** le contrepoids (6) présente deux longerons de contrepoids (64) qui sont en particulier parallèles et espacés l'un de l'autre, et entre lesquels est agencé le dispositif de raccordement de contrepoids (20) respectif des agencements de ressort de flexion (3), et dans lesquels sont ménagées des rainures de passage (62) en forme d'arcs de cercle et alignées par paire, dans lequel à chaque fois une vis de serrage amovible (63) est vissée depuis l'extérieur à travers à chaque fois une rainure de passage (62) dans à chaque fois un taraudage (29) ménagé dans le côté frontal du dispositif de raccordement de contrepoids (20).

23. Transporteur linéaire à vibrations (1) selon les revendications 21, 22, **caractérisé en ce qu'**à chaque agencement de ressort de flexion (3), la ligne centrale (30) des taraudages (29) du dispositif de raccordement de vibreur (19) et la ligne centrale (30) des taraudages (29) du dispositif de raccordement de contrepoids (20), ainsi que l'axe de rotation géométrique (4) du palier rotatif (18) associé sont situés dans un plan géométrique commun.

24. Transporteur linéaire à vibrations (1) selon une ou plusieurs des revendications précédentes, **caractérisé en ce que** des contrepoids (67) sont susceptibles d'être fixés sur le vibreur et sur le contrepoids suivant un poids et/ou une position susceptibles d'être modifiés.
